# EUROPEAN PATENT APPLICATION

(11) **EP 4 836 157 A1**
(43) Date of publication of application: **04.11.2026**
(21) Application number: 24934826.9
(22) Date of filing: 07.11.2024
(51) Int. Cl.: H01M 50/375, H01M 50/342, H01M 50/30, H01M 50/249, H01M 50/244, H01M 50/502, H01M 50/383

(54) **BATTERY CELL, BATTERY AND ELECTRIC DEVICE**

(30) Priority: 08.04.2024 CN 202410418726
(71) Applicant: Contemporary Amperex Technology Co., Limited, Ningde, Fujian 352100 (CN)
(72) Inventor: WU, Kai, Ningde, Fujian 352100 (CN); KE, Jianhuang, Ningde, Fujian 352100 (CN); LI, Yao, Ningde, Fujian 352100 (CN)
(74) Representative: Lorenz Seidler Gossel Part. mbB
(86) International application number: PCT/CN2024/130610
(87) International publication number: WO 2025/213762

(57) **Abstract**

Provided are a battery cell (12), a battery (100) and an electrical device. The battery cell (12) comprises a shell (121), a first pressure relief component (125) and a second pressure relief component (126), wherein the first pressure relief component (125) is disposed on a first wall portion (121a) of the shell (121), and the first pressure relief component (125) is configured to be actuated when the temperature inside the battery cell (12) or outside the battery cell (12) reaches a first threshold value. The second pressure relief component (126) is disposed on a second wall portion (121b) of the shell (121), and the second pressure-relief component (126) is configured to be actuated when the pressure inside the battery cell (12) reaches a second threshold value. The battery cell (12) has relatively high reliability.

## Description

### CROSS-REFERENCE TO RELATED APPLICATION

The present application claims priority to Chinese Patent Application No. 202410418726.0, filed on April 8, 2024 and entitled "BATTERY CELL, BATTERY, AND ELECTRICAL DEVICE", which is incorporated herein by reference in its entirety.

### TECHNICAL FIELD

The present application relates to the technical field of batteries, and in particular, to a battery cell, a battery, and an electrical device.

### BACKGROUND

With energy saving and emission reduction being the key to the sustainable development of the automobile industry, electric vehicles have become an important part of the sustainable development of automotive industry due to their advantages of energy saving and environmental protection. For electric vehicles, battery technology is an important factor related to their development.

How to improve the reliability of battery cells is a problem to be urgently solved in the battery technology.

### SUMMARY OF THE INVENTION

In view of the above problems, the present application provides a battery cell, a battery, and an electrical device, which can improve reliability of the battery cell.

In a first aspect, the present application provides a battery cell, the battery cell includes a shell, a first pressure relief component and a second pressure relief component, where the first pressure relief component is disposed on a first wall portion of the shell, and the first pressure relief component is configured to be actuated when the temperature inside the battery cell or outside the battery cell reaches a first threshold value. The second pressure relief component is disposed on a second wall portion of the shell, and the second pressure relief component is configured to be actuated when the pressure inside the battery cell reaches a second threshold value.

In the technical solution of embodiments of the present application, for a single battery cell, gas is continuously produced inside the battery cell under normal operating conditions; therefore, the configuration of the second pressure relief component may reduce the risk of damage of the shell caused by excessive gas production of the battery cell, and the actuation of the second pressure relief component helps to reduce the risk of explosion of the battery cell. When thermal runaway occurs in the battery cell, the second pressure relief component may be actuated in advance, before the first pressure relief component is actuated, which facilitates in-time pressure relief of the battery cell. After the second pressure relief component is actuated, the first pressure relief component may be actuated as the temperature inside the shell rises, thereby increasing the pressure relief area of the battery cell, enabling smoother pressure relief of the battery cell, and helping to improve the reliability of the battery cell. For a plurality of battery cells inside a battery, when thermal runaway occurs in one of the battery cells, the temperature inside the battery continues to rise as the pressure is released from the battery cell that undergoes thermal runaway, and first pressure relief components of the remaining battery cells may be actuated in advance due to the rise of the external temperature thereof. This helps to reduce the risk of thermal runaway of the remaining battery cells due to heat spreading, thereby reducing the risk of the battery catching fire or even exploding. This helps to improve the reliability of the battery.

In one or more embodiments of the first aspect, the pressure relief component is configured to melt when the temperature inside the battery cell or outside the battery cell reaches a first threshold value.

In the above solution, since the melting process is a relatively rapid physical change process, the first pressure relief component is actuated by melting it, which facilitates in-time pressure relief of the battery cell; moreover, the risk that the first pressure relief component cannot be actuated due to its failure is low, which helps to further improve the reliability of the battery cell.

In one or more embodiments of the first aspect, the first wall portion has a first pressure relief hole, and the first pressure relief component seals the first pressure relief hole.

In the above solution, the first pressure relief component sealing the first pressure relief hole helps to ensure the battery cell having high sealing performance. After the first pressure relief component is actuated, the first pressure relief hole may form a pressure relief channel having a predetermined track, which facilitates pressure relief from the battery cell in a predetermined direction, making the pressure relief of the battery cell more controllable and reducing the risk of thermal runaway in other battery cells caused by thermal runaway in a single battery cell, thereby helping to improve the reliability of the battery. Moreover, the first pressure relief component is configured in a way of sealing the first pressure relief hole, which results in lower design and manufacturing costs.

In one or more embodiments of the first aspect, a plurality of first pressure relief holes are provided, and the plurality of first pressure relief holes are arranged in an array.

In the above solution, the approach of arranging the plurality of first pressure relief holes in an array while enabling a large pressure relief area helps to reduce the area of the single first pressure relief hole, thereby helping to intercept, within the shell, particles resulting from thermal runaway in the battery cell. This may reduce the risk of particles igniting flue gas, and also reduce the risk of particles puncturing the remaining battery cells to cause thermal runaway in those battery cells, thereby helping to further improve the reliability of the battery.

In one or more embodiments of the first aspect, a plurality of first pressure relief holes and a plurality of first pressure relief components are provided, the plurality of first pressure relief holes are spaced apart, the plurality of first pressure relief components are disposed corresponding to the plurality of first pressure relief holes, and the first pressure relief components seal the first pressure relief holes corresponding thereto.

In the above solution, when one of the first pressure relief components is in failure, the remaining pressure relief components may still work normally. This helps to reduce the risk that the pressure in the battery cell cannot be reliably released due to the failure of one of the first pressure relief components, and improves the reliability of the battery cell. Moreover, the design of the first pressure relief components sealing the first pressure relief holes corresponding thereto results in low costs.

In one or more embodiments of the first aspect, at least a part of the first pressure relief component is located within the first pressure relief hole.

In the above solution, the first pressure relief component may share some space of the battery cell with the first wall portion, which helps to increase volumetric energy density of the battery cell.

In one or more embodiments of the first aspect, the first pressure relief component is molded by injection within the first pressure relief hole.

In the above solution, the first pressure relief component is molded by injection within the first pressure relief hole, enabling relatively low processing costs. Besides, the risk of forming a gap between the first pressure relief component and the first pressure relief hole is also low, helping to ensure the battery cell having high sealing performance.

In one or more embodiments of the first aspect, the first pressure relief component includes a main body, a first limiting portion and a second limiting portion, and at least a part of the main body is located within the first pressure relief hole. The first limiting portion and the second limiting portion are respectively connected to two ends of the main body in a thickness direction of the first wall portion, both the first limiting portion and the second limiting portion protrude from an outer peripheral surface of the main body, and a part of the first wall portion is located between the first limiting portion and the second limiting portion.

In the above solution, the configuration of the first limiting portion and the second limiting portion may improve the stability of fitting between the main body and the first pressure relief hole and reduce the risk of seal failure of the battery cell caused by the gap formed between the main body and the first pressure relief hole while lowering the assembly difficulty of the first pressure relief component.

In one or more embodiments of the first aspect, the first wall portion is provided with a first groove on its outer surface, the first wall portion is provided with a second groove on its inner surface, the first pressure relief hole extends through a bottom wall of the first groove and a bottom wall of the second groove, at least a part of the first limiting portion is located within the first groove, and at least a part of the second limiting portion is located within the second groove.

In the above solution, since at least a part of the first limiting portion is located within the first groove and at least a part of the second limiting portion is located within the second groove, the first limiting portion and the second limiting portion may share some space with the first wall portion, which helps to increase the volumetric energy density of the battery cell. Moreover, the first groove and the second groove may serve as an assembly base for the first pressure relief component, which helps to lower the assembly difficulty of the first pressure relief component.

In one or more embodiments of the first aspect, the battery cell further includes a first sealing member, and in the thickness direction of the first wall portion, the first sealing member is disposed between the first limiting portion and the bottom wall of the first groove, or the first sealing member is disposed between the second limiting portion and the bottom wall of the second groove.

In the above solution, the configuration of the first sealing member may reduce the risk of forming the gap between the first wall portion and the first pressure relief component that connects the inside and the outside of the shell, thereby helping to improve the sealing performance of the battery cell.

In one or more embodiments of the first aspect, in the thickness direction of the first wall portion, the first pressure relief component has a first surface facing the inside of the shell and a second surface facing away from the inside of the shell, the first pressure relief component is provided with a third groove, and the third groove is recessed from the first surface toward the second surface, or the third groove is recessed from the second surface toward the first surface.

In the above solution, heat tends to accumulate in the part of the first pressure relief component where the third groove is provided; besides, the configuration of the third groove reduces the thickness of some areas of the first pressure relief component, thereby helping to improve the timeliness of actuation of the first pressure relief component.

In one or more embodiments of the first aspect, a plurality of first pressure relief holes are provided, the plurality of first pressure relief holes are spaced apart, and the first pressure relief component seals the plurality of first pressure relief holes.

In the above solution, since the first pressure relief component seals the plurality of first pressure relief holes, heat spreads throughout the inside of the first pressure relief component after the first pressure relief component begins to actuate. This helps to ensure that more of the first pressure relief holes promptly connect the inside and the outside of the shell, thereby helping to improve the pressure relief efficiency of the battery cell. Furthermore, this helps to reduce the overall mass of the battery cell, thereby helping to increase the mass energy density of the battery cell. Moreover, this also helps to simplify the assembly process of the battery cell and improve the assembly efficiency of the battery cell.

In one or more embodiments of the first aspect, the first wall portion has a fourth groove, the fourth groove is disposed on an outer surface or inner surface of the first wall portion, the first pressure relief hole is disposed on a bottom wall of the fourth groove, and at least a part of the first pressure relief component is accommodated within the fourth groove.

In the above solution, since at least a part of the first pressure relief component is accommodated within the fourth groove, the first pressure relief component may share some space with the first wall portion, which helps to increase the volumetric energy density of the battery cell. Moreover, the fourth groove may serve as an assembly base for the first pressure relief component, which helps to lower the assembly difficulty of the first pressure relief component.

In one or more embodiments of the first aspect, the battery cell further includes a first fixing member, the first fixing member is connected to the first wall portion, a part of the first pressure relief component is located between the first fixing member and a bottom wall of the fourth groove in the thickness direction of the first wall portion, and the first fixing member is configured to fix the first pressure relief component within the fourth groove.

In the above solution, the configuration of the first fixing member may increase the strength of connection between the first pressure relief component and the fourth groove, which helps to reduce the risk of forming a gap between the first pressure relief hole and the first pressure relief component that connects the inside and the outside of the shell due to deformation of the first pressure relief component, thereby helping to improve the sealing performance of the battery cell.

In one or more embodiments of the first aspect, the first fixing member is annular.

In the above solution, the first fixing member has an annular shape, which provides a high strength of connection between the first pressure relief component and the first wall portion while helping to reduce the space occupied by the first fixing member, thereby helping to increase the volumetric energy density of the battery cell. Moreover, since the first fixing member is annular, the risk of the second fixing member blocking the first pressure relief hole when thermal runaway occurs in the battery cell may be reduced.

In one or more embodiments of the first aspect, an outer peripheral surface of the first fixing member is connected to a side wall of the fourth groove.

In the above solution, at least a part of the first fixing member may be accommodated within the fourth groove, so that the first fixing member may share some space with the first wall portion, which helps to increase the volumetric energy density of the battery cell. Furthermore, the side wall of the fourth groove may serve as an assembly base for the first fixing member, facilitating the positioning of the first fixing member and helping to improve the assembly efficiency of the first fixing member.

In one or more embodiments of the first aspect, the battery cell further includes a second sealing member, the second sealing member is located between the first pressure relief component and the bottom wall of the fourth groove in the thickness direction of the first wall portion, and the second sealing member is disposed around the plurality of first pressure relief holes.

In the above solution, the configuration of the second sealing member may reduce the risk of forming a gap between the first pressure relief component and the bottom wall of the fourth groove, thereby helping to improve the sealing performance of the battery cell.

In one or more embodiments of the first aspect, the first wall portion and the second wall portion are located on the same wall of the shell, the second wall portion is provided with a second pressure relief hole, the second pressure relief component is mounted in the second pressure relief hole, and the plurality of first pressure relief holes are arranged around the second pressure relief hole.

In the above solution, since both the first pressure relief component and the second pressure relief component are disposed on a wall portion of the shell, after the second pressure relief component is actuated, an emission will be discharged out of the shell from the second pressure relief hole, while some of the heat carried by the emission may be transferred more quickly from the wall portion of the shell to the first pressure relief component, enabling the first pressure relief component to open in time, thereby helping to further improve the reliability of the battery cell.

In one or more embodiments of the first aspect, the first pressure relief component is provided with a first through hole, and a projection of the second pressure relief component at least partially overlaps with the first through hole in a thickness direction of the second wall portion.

In the above solution, the first through hole may be a pressure relief channel for the second pressure relief component. That is, the pressure relief channel for the second pressure relief component to relieve the pressure shares some space with the first pressure relief component. This helps to increase the volumetric energy density of the battery cell. Moreover, when the emission flows through the first through hole, some of the heat carried by the emission may spread more quickly on the first pressure relief component, allowing more of the first pressure relief holes to connect the inside and the outside of the shell promptly, thereby facilitating in-time opening of the first pressure relief component.

In one or more embodiments of the first aspect, the second wall portion has a first boss, the first boss protrudes from an outer surface or inner surface of the second wall portion, the first boss is disposed around the second pressure relief hole, and the first pressure relief component sleeves an outer peripheral surface of the first boss via the first through hole.

In the above solution, the first boss may serve as an assembly base for the first pressure relief component. This reduces the assembly difficulty of the first pressure relief component.

In one or more embodiments of the first aspect, the battery cell further includes a second fixing member, the second fixing member is connected to the outer peripheral surface of the first boss, a part of the first pressure relief component is located between the second fixing member and the second wall portion in the thickness direction of the second wall portion, and the second fixing member is configured to fix the first pressure relief component onto the second wall portion.

In the above solution, the configuration of the second fixing member may increase the strength of connection between the first pressure relief component and the second wall portion, which helps to reduce the risk of forming a gap between the first pressure relief hole and the first pressure relief component that connects the inside and the outside of the shell due to deformation of the first pressure relief component, thereby helping to improve the sealing performance of the battery cell.

In one or more embodiments of the first aspect, the second fixing member is annular.

In the above solution, the second fixing member has an annular shape, which provides a high strength of connection between the first pressure relief component and the second wall portion while helping to reduce the space occupied by the second fixing member, thereby helping to increase the volumetric energy density of the battery cell. Moreover, since the second fixing member is annular, the risk of the second fixing member blocking the second pressure relief hole when thermal runaway occurs in the battery cell may be reduced.

In one or more embodiments of the first aspect, an outer peripheral surface of the second fixing member is connected to the outer peripheral surface of the first boss.

In the above solution, the second fixing member shares some space with the first boss, which helps to increase the volumetric energy density of the battery cell. Furthermore, the outer peripheral surface of the first boss may serve as an assembly base for the second fixing member, facilitating the positioning of the second fixing member and helping to improve the assembly efficiency of the second fixing member.

In one or more embodiments of the first aspect, the battery cell further includes a third sealing member, the third sealing member is located between the first pressure relief component and the second wall portion in the thickness direction of the second wall portion, and the third sealing member is disposed around the first through hole.

In the above solution, the configuration of the third sealing member may reduce the risk of forming a gap between the first pressure relief component and the second wall portion, thereby helping to improve the sealing performance of the battery cell.

In one or more embodiments of the first aspect, the area of the first pressure relief hole is S₁, satisfying: 1 mm²≤S₁≤100 mm².

In the above solution, when S₁≥1 mm², the first pressure relief hole may have a large area, so that the first pressure relief component has a large pressure relief area, which helps to improve the pressure relief efficiency of the battery cell; when S₁≤100 mm², the first wall may have a high structural stability, which helps to improve the reliability of the battery cell; therefore, when 1 mm2≤S₁≤100 mm2, the battery cell may achieve both high pressure relief efficiency and high reliability.

In one or more embodiments of the first aspect, 2 mm²≤S₁≤50 mm².

In the above solution, when S₁≥2 mm², the area of the first pressure relief hole may be further increased, which helps to further improve the pressure relief efficiency of the battery cell; when S₁≤50 mm², the structural stability of the first wall portion may be further improved, which helps to further improve the reliability of the battery cell; therefore, when 2 mm²≤S1≤50 mm², both the pressure relief efficiency and reliability of the battery cell may be further improved.

In one or more embodiments of the first aspect, the second pressure relief component includes a body and a filter element, the body has an opening region, the filter element is disposed on a side of the opening region facing the inside of the shell, and the filter element is configured to divide the opening region into multiple sub-regions.

In the above solution, the configuration of the filter element may allow the battery cell to have a large pressure relief area while helping to intercept, within the shell, particles resulting from thermal runaway in the battery cell. This may reduce the risk of particles igniting flue gas, and also reduce the risk of particles puncturing the remaining battery cells to cause thermal runaway in those battery cells, thereby helping to further improve the reliability of the battery.

In one or more embodiments of the first aspect, a fifth groove is disposed on a side of the second pressure relief component facing the inside of the shell, the opening region is formed on a bottom wall of the fifth groove, at least a part of the filter element is accommodated within the fifth groove, and the filter element is connected to a side wall of the fifth groove.

In the above solution, the filter element may share some space with the fifth groove, thereby helping to decrease the volumetric energy density of the battery cell; moreover, the side wall of the fifth groove may serve as an assembly base for the filter element, which helps to simplify the assembly of the filter element and improve the assembly efficiency of the battery cell.

In one or more embodiments of the first aspect, the area of the sub-region is S₂, satisfying: 1 mm²≤S₂≤400 mm².

In the above solution, when S₂≥ 1 mm², the sub-region may have a large area, so that the second pressure relief component may have a large pressure relief area, which helps to improve the pressure relief efficiency of the battery cell; when S₂≤ 400 mm², it is conducive to intercepting relatively small particles within the shell, thereby reducing the risk that particles are ejected from the shell to cause thermal runaway in the remaining battery cells and to ignite the flue gas, and helping to improve the reliability of the battery cell; therefore, when 1 mm²≤S₂≤ 400 mm², the battery cell may achieve both high pressure relief efficiency and high reliability.

In one or more embodiments of the first aspect, 2 mm²≤S₂≤200 mm².

In the above solution, when S₂≥2 mm², the area of the sub-region may be further increased, so that the second pressure relief component has a large pressure relief area, which helps to further improve the pressure relief efficiency of the battery cell; when S₂≤200 mm², it is conducive to intercepting smaller particles within the shell, thereby further reducing the risk that particles are ejected from the shell to cause thermal runaway in the remaining battery cells and to ignite the flue gas, and helping to improve the reliability of the battery cell; therefore, when 2 mm²≤S₂≤200 mm², the pressure relief efficiency of the battery cell may be further improved while the risk that particles are ejected from the shell to cause thermal runaway in the remaining battery cells and to ignite the flue gas may be further reduced.

In one or more embodiments of the first aspect, the first threshold value is T, satisfying: 95°C≤T≤300°C.

In one or more embodiments of the first aspect, the second threshold value is P, satisfying: 0.3 MPa≤P≤2.3 MPa.

In one or more embodiments of the first aspect, the shell includes a case and an end cover, the case includes a bottom wall and a side wall surrounding the bottom wall, one end of the side wall is connected to the bottom wall, the other end of the side wall encloses to form an opening, and the end cover is configured to cover the opening; where the end cover is provided with the first pressure relief component and the second pressure relief component.

In the above solution, the first pressure relief component and the second pressure relief component are disposed on the end cover, which facilitates the machining and lowers the assembly difficulty of the first pressure relief component and the second pressure relief component.

In one or more embodiments of the first aspect, the bottom wall is provided with the first pressure relief component.

In the above solution, since the bottom wall is also provided with the first pressure relief component, the pressure relief area of the battery cell may be further increased, thereby improving the pressure relief efficiency of the battery cell.

In one or more embodiments of the first aspect, the shell includes a case and an end cover, the case includes a bottom wall and a side wall surrounding the bottom wall, one end of the side wall is connected to the bottom wall, the other end of the side wall encloses to form an opening, and the end cover is configured to cover the opening; where the end cover is provided with the second pressure relief component, and the bottom wall is provided with the first pressure relief component.

In the above solution, the second pressure relief component and the first pressure relief component are disposed on the end cover and the bottom wall respectively. This simplifies the assembly of the first and second pressure relief components and, to some extent, may increase the structural strength of the end cover.

In one or more embodiments of the first aspect, the shell includes a case and an end cover, the case includes a bottom wall and a side wall surrounding the bottom wall, one end of the side wall is connected to the bottom wall, the other end of the side wall encloses to form an opening, and the end cover is configured to cover the opening; where the end cover is provided with the first pressure relief component, and the bottom wall is provided with the second pressure relief component.

In the above solution, the second pressure relief component and the first pressure relief component are disposed on the end cover and the bottom wall respectively. This simplifies the assembly of the first pressure relief component and the second pressure relief component. Moreover, the first pressure relief component is disposed on the end cover such that the case has a high structural strength.

In one or more embodiments of the first aspect, the shell includes a case, a first end cover and a second end cover, the case includes a third side wall and a fourth side wall disposed opposite each other in a third direction, as well as a first side wall and a second side wall disposed opposite each other in a second direction, the third side wall, the fourth side wall, the first side wall and the second side wall enclose to form an accommodating cavity having a first opening and a second opening, the first opening and the second opening are disposed opposite each other in a first direction, the first end cover is configured to cover the first opening, the second end cover is configured to cover the second opening, and the first direction, the second direction and the third direction are perpendicular to one another; where the third side wall is provided with the second pressure relief component, and both the first end cover and the second end cover are provided with the first pressure relief component.

In the above solution, the second pressure relief component is disposed on the third side wall while the first pressure relief components are disposed on the first end cover and second end cover respectively. This simplifies the assembly of the first pressure relief components. Moreover, the second pressure relief component is disposed on the third side wall, which helps to ensure that the shell has a specific pressure relief area while maintaining a high strength.

In a second aspect, the present application provides a battery which includes a battery cell in one or more embodiments of the first aspect.

In the above solution, since the battery cell in one or more embodiments of the first aspect has high reliability, the battery including the battery cell in one or more embodiments of the first aspect also has high reliability.

In a third aspect, the present application provides an electrical device, which includes a battery cell in one or more embodiments of the first aspect, or a battery in one or more embodiments of the first aspect, where the battery cell or the battery is configured to supply electric energy.

In the above solution, since the battery cell in one or more embodiments of the first aspect or the battery in one or more embodiments of the first aspect has high reliability, the electrical device including the battery cell in one or more embodiments of the first aspect or the battery in one or more embodiments of the first aspect also has high reliability.

The above description is only an overview of the technical solution of the present application. In order to more clearly understand the technical means of the present application to implement same according to the contents of the Specification, and in order to enable the other objectives, features, and advantages of the present application to be more obvious and understandable, Detailed Description of the present application is hereby exemplarily described below.

### DESCRIPTION OF DRAWINGS

By reading the detailed description of the preferred embodiments below, various other advantages and benefits will become apparent to those of ordinary skill in the art. The drawings are used for the purpose of illustrating the preferred embodiments only and are not to be considered a limitation to the present application. Moreover, in all of the drawings, the same components are indicated by the same reference numerals. In the drawings:
FIG. 1 is a schematic structural diagram of a vehicle according to some embodiments of the present application;
FIG. 2 is an exploded view of a battery according to some embodiments of the present application;
FIG. 3 is an exploded view of a battery cell according to some embodiments of the present application;
FIG. 4 is an exploded view of part of the structure of a battery cell according to some embodiments of the present application;
FIG. 5 is a top view of a battery cell according to some embodiments of the present application;
FIG. 6 is a cross-sectional view taken along A-A in FIG. 5;
FIG. 7 is an enlarged view of part B in FIG. 6;
FIG. 8 is an exploded view of part of the structure of a battery cell according to other embodiments of the present application;
FIG. 9 is a top view of a battery cell according to other embodiments of the present application;
FIG. 10 is a cross-sectional view taken along C-C in FIG. 9;
FIG. 11 is a partial enlarged view of part D in FIG. 10;
FIG. 12 is an exploded view of part of the structure of a battery cell according to yet other embodiments of the present application;
FIG. 13 is a partial enlarged view of part E in FIG. 12;
FIG. 14 is a top view of a battery cell according to yet other embodiments of the present application;
FIG. 15 is a cross-sectional view taken along F-F in FIG. 14;
FIG. 16 is a cross-sectional view of part G in FIG. 15;
FIG. 17 is an exploded view of part of the structure of a battery cell according to other embodiments of the present application;
FIG. 18 is a partial enlarged view of part H in FIG. 17;
FIG. 19 is a top view of a battery cell according to other embodiments of the present application;
FIG. 20 is a cross-sectional view taken along I-I in FIG. 19;
FIG. 21 is a cross-sectional view of part J in FIG. 20;
FIG. 22 is an exploded view of part of the structure of a battery cell according to some other embodiments of the present application;
FIG. 23 is a top view of a battery cell according to some other embodiments of the present application;
FIG. 24 is a cross-sectional view taken along K-K in FIG. 23;
FIG. 25 is a partial enlarged view of part L in FIG. 24;
FIG. 26 is an exploded view of part of the structure of a battery cell according to some embodiments of the present application, showing a first mixing member;
FIG. 27 is a top view of a battery cell according to some embodiments of the present application, showing a first fixing member;
FIG. 28 is a cross-sectional view taken along M-M in FIG. 27;
FIG. 29 is a cross-sectional view of part N in FIG. 28;
FIG. 30 is an exploded view of part of the structure of a battery cell according to some embodiments of the present application, showing a second fixing member;
FIG. 31 is a top view of a battery cell according to some embodiments of the present application, showing a second pressure relief component;
FIG. 32 is a cross-sectional view taken along O-O in FIG. 31;
FIG. 33 is a partial enlarged view of part Q in FIG. 32;
FIG. 34 is a cross-sectional view taken along P-P in FIG. 31;
FIG. 35 is a partial enlarged view of part R in FIG. 34;
FIG. 36 is an exploded view of part of the structure of a battery cell according to some embodiments of the present application, showing a second pressure relief component and a first fixing member;
FIG. 37 is a top view of a battery cell according to some embodiments of the present application, showing a first pressure relief component and a second pressure relief component;
FIG. 38 is a cross-sectional view taken along S-S in FIG. 37;
FIG. 39 is a partial enlarged view of part U in FIG. 38;
FIG. 40 is a cross-sectional view taken along T-T in FIG. 37;
FIG. 41 is a partial enlarged view of part V in FIG. 40;
FIG. 42 is an axonometric view of a battery cell according to some embodiments of the present application;
FIG. 43 is an axonometric view of a battery cell according to some embodiments of the present application, showing a bottom wall;
FIG. 44 is an axonometric view of a battery cell according to other embodiments of the present application;
FIG. 45 is an axonometric view of a battery cell according to other embodiments of the present application, showing a bottom wall;
FIG. 46 is an axonometric view of a battery cell according to yet other embodiments of the present application;
FIG. 47 is an axonometric view of a battery cell according to yet other embodiments of the present application, showing a bottom wall;
FIG. 48 is an axonometric view of a battery cell according to other embodiments of the present application;
FIG. 49 is an axonometric view of a battery cell according to other embodiments of the present application, showing a bottom wall;
FIG. 50 is an axonometric view of a battery cell according to some embodiments of the present application, showing a third side wall;
FIG. 51 is an axonometric view of a battery cell according to some embodiments of the present application, showing a fourth side wall;
FIG. 52 is an axonometric view of a battery cell according to some embodiments of the present application, showing a first end cover;
FIG. 53 is an axonometric view of a battery cell according to some embodiments of the present application, showing a second side wall.

Reference signs in specific embodiments are as follows:
1000 - vehicle; 200 - controller; 300 - motor; 100 - battery; 11 - box; 111 - first box body; 112 - second box body; 12 - battery cell; 121 - shell; 1211 - end cover; 1212 - case; 12121 - bottom wall; 12122 - third side wall; 12123 - fourth side wall; 12124 - first side wall; 12125 - second side wall; 12126 - first end cover; 12127 - second end cover; 121a - first wall portion; 121b - second wall portion; 122 - electrode assembly; 123 - electrode terminal; 124 - adapter plate; 125 - first pressure relief component; 1251 - main body; 1252 - first limiting portion; 1253 - second limiting portion; 1254 - third groove; 1255 - first through hole; 126 - second pressure relief component; 1261 - fifth groove; 127 - first pressure relief hole; 128 - first groove; 129 - second groove; 1210 - first sealing member; 1213 - fourth groove; 1214 - first fixing member; 1215 - second sealing member; 1216 - second pressure relief hole; 1217 - second fixing member; 1218 - third sealing member; 1219 - filter element; 1220 - first boss; X - first direction; Y - second direction; Z - third direction.

### DETAILED DESCRIPTION OF EMBODIMENTS

Embodiments in technical solutions of the present application will be described in detail below in conjunction with the accompanying drawings. The following embodiments are only configured to illustrate the technical solutions of the present application more clearly, and thus are only interpreted as examples, rather than configured to limit the scope of protection of the present application.

Unless otherwise defined, all technical and scientific terms used herein have the same meanings as generally understood by those skilled in the art of the present application; the terms used herein are intended only to describe specific embodiments and are not intended to limit the present application; and the terms "including" and "having" and any variations thereof in the description and claims of the present application and in the foregoing description of the accompanying drawings are intended to cover non-exclusive inclusions.

In the description of the embodiments of the present application, the technical terms "first", "second", and the like are used only to distinguish between different objects, and are not to be understood as indicating or implying a relative importance or implicitly specifying the number, particular order, or primary and secondary relation of the technical features indicated. In the description of the embodiments of the present application, the meaning of "a plurality of" is two or more, unless otherwise explicitly and specifically defined.

Reference to "an embodiment" herein means that a particular feature, structure, or characteristic described with reference to an embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "plurality of" refers to at least two (including two); similarly, "plurality of groups" refers to at least two (including two) groups, and "plurality of pieces" refers to at least two (including two) pieces.

In the description of the embodiments of the present application, the orientation or position relationship indicated by the technical terms "center", "longitudinal", "transverse", "length", "width", "thickness", "upper," "lower," "front," "back," "left," "right," "vertical," "horizontal," "top," "bottom," "inner," "outer," "clockwise," "counterclockwise," "axial", "radial", "circumferential", etc. are based on the orientation or position relationship shown in the drawings and are intended to facilitate the description of the embodiments of the present application and simplify the description only, rather than indicating or implying that the device or element referred to must have a particular orientation or be constructed and operated in a particular orientation, and therefore are not to be interpreted as limitations on the embodiments of the present application.

In the present application, battery cells may include, but are not limited to, lithium-ion secondary batteries, lithium-ion primary batteries, lithium-sulfur batteries, sodium/lithium-ion batteries, sodium-ion batteries or magnesium-ion batteries, etc. The shape of battery cells may include, but is not limited to, a cylindrical shape, a flat shape, a rectangular shape, or other shapes. According to packaging methods, battery cells may include, but are not limited to, cylindrical cells, prismatic cells, pouch cells, and blade cells.

In high-power applications such as electric vehicles, the application of batteries involves three levels: battery cells, battery modules, and batteries. A battery module is designed to protect battery cells against external impacts, heat, and vibration, which is formed by electrically connecting a specific number of battery cells and housing them within a frame. A battery refers to the final configuration of a battery system installed in an electric vehicle. The battery mentioned in the embodiments of the present application is a single physical module that includes one or more battery cells for providing a higher voltage and capacity. The battery generally includes a box for packaging one or more battery cells. The box may lower the risk of liquids or other foreign matters affecting charging or discharging of the battery cells.

The following will focus primarily on a rectangular cell. It should be understood that the embodiments described below are also applicable to a cylindrical battery cell or a pouch cell or a blade battery cell in some aspects.

In a common battery cell structure, the battery cell includes a shell, an electrode assembly, and an electrolyte. The shell includes an end cover and a case, and the end cover seals an opening of the case to define an accommodating space for accommodating the electrode assembly.

The electrode assembly is accommodated within the accommodating space, and the electrode assembly includes a positive electrode plate, a negative electrode plate, and a separator. The battery cell works mainly relying on the movement of metal ions between the positive electrode plate and the negative electrode plate. The positive electrode plate includes a positive electrode current collector and a positive electrode active material layer, a surface of the positive electrode current collector is coated with the positive electrode active material layer, the positive electrode current collector not coated with the positive electrode active material layer protrudes from the positive electrode current collector already coated with the positive electrode active material layer, and the positive electrode current collector not coated with the positive electrode active material layer is used as a positive tab. Taking a lithium-ion battery as an example, the material of the positive electrode current collector may be aluminum, and the positive electrode active material may be lithium cobalt oxide, lithium iron phosphate, ternary lithium, lithium manganate, or the like. The negative electrode plate includes a negative electrode current collector and a negative electrode active material layer, a surface of the negative electrode current collector is coated with the negative electrode active material layer, the negative electrode current collector not coated with the negative electrode active material layer protrudes from the negative electrode current collector already coated with the negative electrode active material layer, and the negative electrode current collector not coated with the negative electrode active material layer is used as a negative tab. The material of the negative electrode current collector may be copper, and the negative electrode active material may be carbon, silicon, or the like. In order to ensure that no fusing occurs when a large current passes, there are a plurality of positive electrode tabs which are stacked together, and there are a plurality of negative electrode tabs which are stacked together. In addition, the electrode assembly may be formed by methods including, but not limited to, winding or stacking.

Tabs typically extract electric energy from the electrode assembly by making an electrical connection with conductive elements. In some cases, the conductive elements are adapter plates that connect the tabs to electrode terminals respectively. In other cases, the electrode terminals serve as the conductive elements.

The electrode terminals generally include a positive electrode terminal and a negative electrode terminal. For the rectangular cell, the electrode terminals are generally disposed on the end cover part. In some other cases, the electrode terminals may also be disposed on the case part.. A plurality of battery cells are connected in series and/or in parallel via the electrode terminals for use in various application scenarios.

For a battery cell, there are generally at least three protective measures. Specifically, the protective measures include at least a switching element, selection of an appropriate separator material, and a pressure relief component.

The pressure relief component refers to an element or component that is actuated to relieve the internal pressure or temperature when the internal pressure or temperature or other conditions of the battery cell reach a predetermined threshold value. The design of the threshold value varies according to different design requirements. The threshold value may depend on the material of one or more of the positive electrode plate, the negative electrode plate, the electrolyte, and the separator in the battery cell. The pressure relief component may specifically take a form of an explosion-proof valve, a gas valve, a pressure relief valve, a safety valve, or the like, and may specifically use a pressure sensitive or temperature sensitive element or structure. That is, when the internal pressure or temperature of the battery cell reaches the predetermined threshold value, the pressure relief component performs an action or a weak structure provided in the pressure relief component is destroyed, thereby forming an opening or channel for the relief of the internal pressure or temperature. Generally, the melting point and/or thickness of the weak structure is lower than that of other areas of the pressure relief component. For example, the weak structure may be notches on a surface of the pressure relief component.

The term "actuate" mentioned in the present application refers to that the pressure relief component performs an action or is activated to a specific state, so that the internal pressure and temperature of the battery cell is released. The action performed by the pressure relief component may include, but is not limited to, cracking, breaking, tearing, melting or opening of at least a part of the pressure relief component. The actuation of the pressure relief component may also be referred to as the opening of the pressure relief component. When the pressure relief component is actuated, the high-temperature high-pressure substances inside the battery cell are discharged as an emission from an actuated portion. In this way, the pressure and temperature of the battery cell can be relieved under controllable pressure or temperature, so as to reduce the risk of more serious potential accidents. For example, events such as short circuits or overcharging may cause thermal runaway inside the battery cell, leading to a sudden rise in pressure or temperature. In this case, the internal pressure and temperature can be released to the outside through the pressure relief component to reduce the probability of the battery cell exploding or catching fire.

The emission from the battery cell mentioned in the present application includes, but is not limited to, electrolyte, dissolved or split positive and negative electrode plates, fragments of the separator, high-temperature high-pressure gas produced by reactions, flames, and the like.

Many design factors, such as energy density, cycle life, discharge capacity, charge-discharge rate and other performance parameters, should be considered in the development of the battery technology. In addition, the reliability of the battery also needs to be taken into account.

There is only one pressure relief component on a shell of a common battery cell. When thermal runaway occurs in the battery cell, the emission inside the shell is discharged via the pressure relief component, achieving the purpose of relieving the internal pressure of the battery cell. In such a battery cell, the shell is only provided with one pressure relief component, resulting in insufficient pressure relief capacity.This may lead to delay in pressure relief, resulting in poor reliability of the battery cell.

In view of this, the present application provides a battery cell, the battery cell includes a shell, a first pressure relief component and a second pressure relief component, where the first pressure relief component is disposed on a first wall portion of the shell, and the first pressure relief component is configured to be actuated when the temperature inside the battery cell or outside the battery cell reaches a first threshold value. The second pressure relief component is disposed on a second wall portion of the shell, and the second pressure relief component is configured to be actuated when the pressure inside the battery cell reaches a second threshold value. For a single battery cell, gas is continuously produced inside the battery cell under normal operating conditions; therefore, the configuration of the second pressure relief component may reduce the risk of damage of the shell caused by excessive gas production of the battery cell, and the actuation of the second pressure relief component helps to reduce the risk of explosion of the battery cell. When thermal runaway occurs in the battery cell, the second pressure relief component may be actuated in advance, before the first pressure relief component is actuated, which facilitates in-time pressure relief of the battery cell. After the second pressure relief component is actuated, the first pressure relief component may be actuated as the temperature inside the shell rises, thereby increasing the pressure relief area of the battery cell, enabling smoother pressure relief of the battery cell, and helping to improve the reliability of the battery cell. For a plurality of battery cells inside a battery, when thermal runaway occurs in one of the battery cells, the temperature inside the battery continues to rise as the pressure is released from the battery cell that undergoes thermal runaway, and first pressure relief components of the remaining battery cells may be actuated in advance due to the rise of the external temperature thereof. This helps to reduce the risk of thermal runaway of the remaining battery cells due to heat spreading, thereby reducing the risk of the battery catching fire or even exploding. This helps to improve the reliability of the battery.

The technical solution described in the embodiments of the present application is applicable to a battery cell, a battery and an electrical device using the battery.

The electrical device includes, but is not limited to, a battery vehicle, an electric vehicle, a ship, and a spacecraft, etc. For example, the spacecraft includes an airplane, a rocket, a space shuttle, and a spaceship, etc.

For the ease of description, the following embodiments are used for illustration where a vehicle 1000 is taken, for example, as an electrical device in an embodiment of the present application.

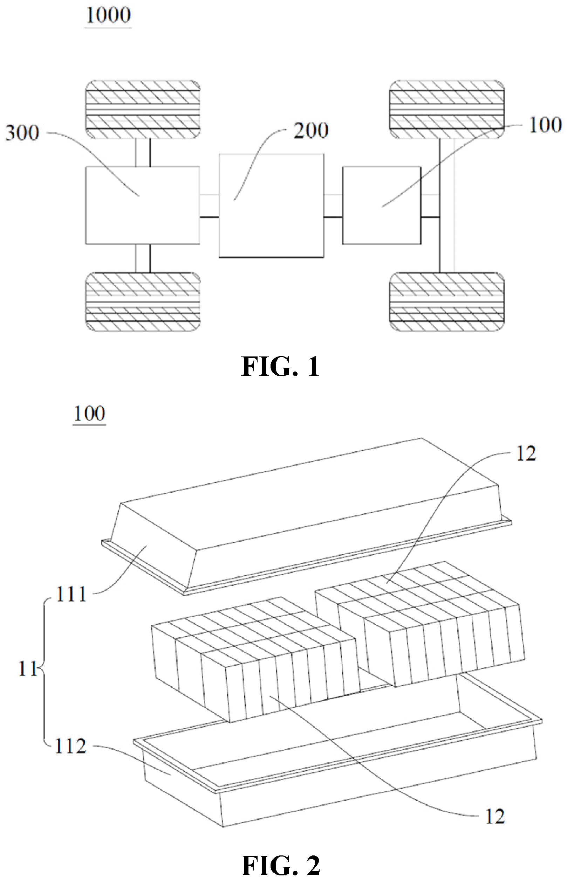

For example, FIG. 1 is a schematic structural diagram of a vehicle 1000 according to some embodiments of the present application. The vehicle 1000 may be a fuel vehicle, a gas vehicle, or a new energy vehicle, and the new energy vehicle may be a battery electric vehicle, a hybrid electric vehicle, an extended range electric vehicle, or the like. A motor 300, a controller 200 and a battery 100 may be provided inside the vehicle 1000, and the controller 200 is configured to control the battery 100 to supply power to the motor 300. For example, the battery 100 may be disposed at the bottom, the front, or the rear of the vehicle 1000. The battery 100 may be configured to power the vehicle 1000. For example, the battery 100 may serve as an operating power source for the vehicle 1000 for a circuit system of the vehicle 1000, for example, for the working power requirements of the vehicle 1000 during startup, navigation, and running. In another embodiment of the present application, the battery 100 may be used not only as the operating power source of the vehicle 1000, but also as the driving power source of the vehicle 1000 in place of or partially in place of fuel or natural gas to provide driving power for the vehicle 1000.

To meet different power usage requirements, the battery 100 may include a plurality of battery cells 12, where the plurality of battery cells 12 may be connected in series, parallel, or series-parallel mode, and being connected in series-parallel mode refers to a combination of series and parallel connections. The battery 100 may also be referred to as a battery pack. Optionally, a plurality of battery cells 12 may be in series, parallel or series-parallel connection to form a battery module first, and then a plurality of battery modules may be in series, parallel or series-parallel connection to form a battery 100. That is to say, the plurality of battery cells 12 may directly form the battery 100, or may form the battery module first, and then the battery modules form the battery 100.

For example, referring to FIG. 2, which is an exploded view of a battery 100 according to some embodiments of the present application, the battery 100 may include a plurality of battery cells 12. The battery 100 may further include a box 11, the inside of the box 11 is a hollow structure, and the plurality of battery cells 12 are accommodated within the box 11. As shown in FIG. 2, these are referred to here as a first box body 111 and a second box body 112, respectively. The first box body 111 and the second box body 112 are snap-fitted together. Shapes of the first box body 111 and the second box body 112 may be determined based on the shape of a combination of the plurality of battery cells 12, and the first box body 111 and the second box body 112 each may have an opening side. For example, the first box body 111 and the second box body 112 each may be a hollow cuboid and have only one opening side, the opening side of the first box body 111 is disposed opposite the opening side of the second box body 112, and the first box body 111 and the second box body 112 are snap-fitted to form the box 11 with an enclosed chamber. The plurality of battery cells 12 are connected in parallel, or in series, or in serial-parallel mode, and then put into the box 11 formed after the first box body 111 and the second box body 112 are snap-fitted together.

Optionally, the battery 100 may further include other structures. Details are not described herein. For example, the battery 100 may further include a busbar component. The busbar component is configured to implement electrical connection between the plurality of battery cells 12, for example, parallel, series, or series-parallel connection. Specifically, the busbar component may implement electrical connection between the battery cells 12 by connecting electrode terminals 123 of the battery cells 12. Further, the busbar component may be fixed onto the electrode terminals 123 of the battery cells 12 by welding. Electric energy of the plurality of battery cells 12 may be further extracted through the box 11 by means of a conductive mechanism.

According to different power requirements, the quantity of battery cells 12 may be set as any value. The plurality of battery cells 12 may be connected in series or in parallel, or serial-parallel mode to achieve a great capacity or power. Because each battery 100 may include a large quantity of battery cells 12, for ease of installation, the battery cells 12 may be disposed by group, and each group of battery cells 12 form a battery module. The quantity of battery cells 12 included in the battery module is not limited, and may be set according to requirements. The battery 100 may include a plurality of battery modules, and these battery modules may be connected in series, in parallel or in series-parallel mode.

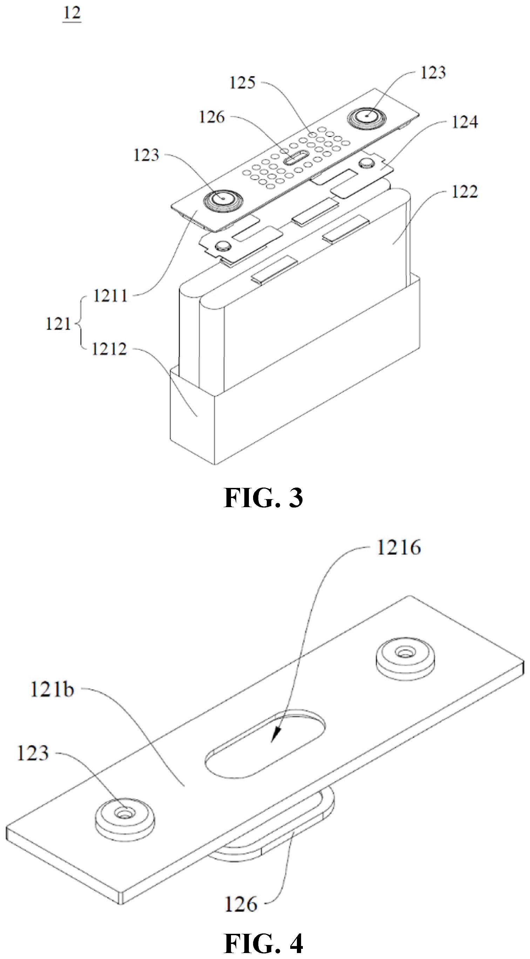

Referring to FIG. 3, which is an exploded view of a battery cell 12 according to some embodiments of the present application, the battery cell 12 includes one or more electrode assemblies 122 and a shell 121. The shell 121 may include a case 1212. Wall portions of the shell 1212, i.e., walls of the shell 121, enclose a cavity that can be used for accommodating the electrode assembly 122. The case 1212 is determined based on the shape of a combination of one or more electrode assemblies 122. For example, the case 1212 may be a hollow cuboid, cube, or cylinder, and the case 1212 has an opening side, so that the one or more electrode assemblies 122 can be placed in the case 1212. The case 1212 is filled with an electrolyte, such as an electrolyte solution.

The battery cell 12 may further include two electrode terminals 123. The two electrode terminals 123 may be disposed on an end cover 1211. The end cover 1211 is usually shaped as a flat plate, and the two electrode terminals 123 are fixed onto the planar surface of the end cover 1211. The two electrode terminals 123 includes a positive electrode terminal 123 and a negative electrode terminal 123. Each of the electrode terminals 123 is provided with a corresponding adapter plate 124 that is located between the end cover 1211 and the electrode assembly 122 and is configured to electrically connect the electrode assembly 122 to the electrode terminal 123. In the battery cell 12, according to actual use requirements, a single or a plurality of electrode assemblies 122 may be provided. The battery cell 12 contains a plurality of independent electrode assemblies 122.

According to some embodiments of the present application, referring to FIG. 3, the present application provides a battery cell 12, the battery cell 12 includes a shell 121, a first pressure relief component 125 and a second pressure relief component 126, where the first pressure relief component 125 is disposed on a first wall portion 121a of the shell 121, and the first pressure relief component 125 is configured to be actuated when the temperature inside the battery cell 12 or outside the battery cell 12 reaches a first threshold value. The second pressure relief component 126 is disposed on a second wall portion 121b of the shell 121, and the second pressure relief component 126 is configured to be actuated when the pressure inside the battery cell 12 reaches a second threshold value.

The shell 121 is configured to accommodate components, such as the electrode assembly 122 and the electrolyte. As an example, the shell 121 may include a case 1212 and an end cover 1211.

The case 1212 may be a hollow structure with an opening formed at one end, or the case 1212 may be a hollow structure with openings formed at two opposite ends. The case 1212 may have various shapes, such as a cylindrical shape or a prismatic shape. The case 1212 may be made of various materials, such as copper, iron, aluminum, steel, aluminum alloys, and plastics.

The end cover 1211 refers to a component that covers the opening of the case 1212 to isolate an internal environment of the battery cell 12 from an external environment thereof. The end cover 1211 and the case 1212 jointly define an accommodating space for accommodating the electrode assembly 122, the electrolyte, and other components. The end cover 1211 may be connected to the case 1212 by means of seaming or welding. The shape of the end cover 1211 may be matched with the shape of the shell 121. For example, if the case 1212 is of a cuboid structure, the end cover 1211 may be of a rectangular plate-shaped structure matched with the shell 121. For another example, if the case 1212 is of a cylinder structure, the end cover 1211 may be of a circular plate-shaped structure matched with the case 1212. The end cover 1211 may also be made of various materials, such as copper, iron, aluminum, steel, aluminum alloys, and plastics. The end cover 1211 and the case 1212 may be made of the same or different materials.

In an embodiment where the case 1212 is opening at one end, a corresponding end cover 1211 may be provided. In an embodiment where the case 1212 is provided with openings at two opposite ends, two end covers 1211 may be provided correspondingly. The two end covers 1211 cover the two openings of the case 1212 respectively, and the two end covers 1211 and the case 1212 jointly define the accommodating space.

The first wall portion 121a and the second wall portion 121b refer to a part of walls of the shell 121. The first wall portion 121a and the second wall portion 121b may be located on the same wall or different walls of the shell 121. For example, in an embodiment where the shell 121 includes the end cover 1211 and the case 1212, the first wall portion 121a may be a part of the end cover 1211, and the second wall portion 121b may be a part of a wall of the case 1212. For another example, both the first wall portion 121a and the second wall portion 121b may be parts of the end cover 1211.

The first pressure relief component 125 and the first wall portion 121a may be integrally formed. For example, the first pressure relief component 125 and the first wall portion 121a may be formed simultaneously using a cast-in process. The first pressure relief component 125 and the second wall portion 121b may be provided as separate parts, with the first pressure relief component 125 mounted on the first wall portion 121a. The second pressure relief component 126 and the second wall portion 121b may be integrally formed. For example, a thinner weaker portion may be formed on the second wall portion 121b as the second wall portion 121b is formed. The pressure relief component 126 and the first wall portion 121b may also be provided as separate parts, with the second pressure relief component 126 mounted on this wall portion.

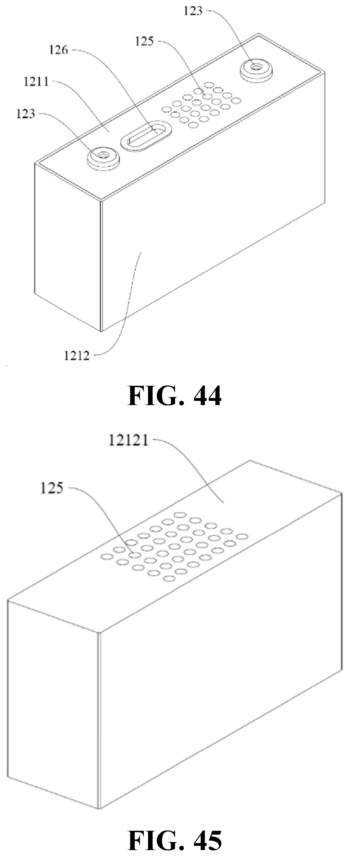

A single or a plurality of first pressure relief components 125 may be provided. The plurality of first pressure relief components 125 may be located on the same wall or different walls of the shell 121. A single or a plurality of second pressure relief components 126 may be provided. The plurality of second pressure relief components 126 may be located on the same wall or different walls of the shell 121. In some embodiments, referring to FIG. 3, a plurality of first pressure relief components 125 may be arranged around the second pressure relief component 126. In some other embodiments, referring to FIG. 44, a second pressure relief component 126 may be spaced apart from a plurality of first pressure relief components 125.

In some embodiments, a pressure relief hole is provided in a wall of the shell 121, and the first pressure relief component 125 may be a component that fills the pressure relief hole; the component has a melting point lower than that of the wall of the shell 121 where the pressure relief hole is located. For example, if the shell 121 is made of metal such as copper, iron, aluminum, steel, or aluminum alloy, the first pressure relief component 125 may be made of material including, but not limited to, plastics, silicone rubber, fluorocarbon rubber, etc. In an embodiment where the first pressure relief component 125 is made of plastics, the material of the first pressure relief component 125 may be polyethylene, polypropylene, polycarbonate, polyester, polyamide, polyvinylidene fluoride, etc. In an embodiment where the first pressure relief component 125 is made of metal, the material of the first pressure relief component 125 may be a lead-tin-antimony alloy, etc.

In other embodiments, both the first pressure relief component 125 and the shell 121 are made of metal. In this embodiment, the first pressure relief component 125 is a component with a melting point lower than that of the wall of the shell 121 where the first pressure relief component 125 is located. Of course, in some other embodiments, the first pressure relief component 125 may also refer to a component provided with a temperature sensitive inductive element; when the temperature sensitive inductive element detects that the temperature has reached the first threshold value, the first pressure relief component 125 is opened to connect the inside and the outside of the shell 121 to relieve the pressure inside the battery cell 12.

The first pressure relief component 125 and the second pressure relief component 126 are two pressure relief components in the battery cell 12. For a single battery cell 12, when thermal runaway occurs in the battery cell 12, in normal circumstances, the flow velocity of a high-pressure gas in the emission is relatively high, which means gas ejection being relatively violent. The battery cell 12 is more likely to reach the second threshold value. The time it takes for the temperature in the area near the first pressure relief component 125 to reach the first threshold value is relatively long. Therefore, in normal circumstances, the second pressure relief component 126 will be opened before the first pressure relief component 125. When thermal runaway occurs in the battery cell 12, the first pressure relief component 125 may be opened some time after the second pressure relief component 126 has been opened. For example, after the second pressure relief component 126 is opened, some of the heat from the emission accumulates near the first pressure relief component 125. Once the heat in the area near the first pressure relief component 125 reaches the first threshold value, the first pressure relief component 125 is opened. Alternatively, the first pressure relief component 125 may not be opened after the second pressure relief component 126 is opened. For example, after the second pressure relief component 126 is opened, the thermal runaway reaction in the electrode assembly 122 does not continue to spread as the emission inside the shell 121 is discharged, the temperature in the area near the first pressure relief component 125 remains below the first threshold value and the first pressure relief component 125 is not opened. Of course, in some cases, thermal runaway in battery cell 12 may be caused by short circuits or the like, leading to a sharp rise in the temperature of the electrode assembly 122. Although the temperature in the area near the first pressure relief component 125 has reached the first threshold value, the pressure inside the battery cell 12 has not reached the second threshold value due to the gas produced by thermal decomposition of the electrode assembly 122. In this case, the pressure relief component 125 is opened before the second pressure relief component 126. When the battery cell 12 is in normal operation, a certain amount of gas is produced inside the battery cell 12. When too much gas accumulates inside the closed shell 121, it may cause the risk of the shell 121 being separated from the cover, for example, the end cover 1211 being separated from the shell 1212. The configuration of the second pressure relief component 126 may reduce the risk of the shell 121 being separated from the cover due to normal gas production of the battery cell 12, thereby reducing the risk of internal short circuits of the battery 100 after the shell being separated from the cover.

For the battery 100 including a plurality of battery cells 12, for example, referring to FIG. 3, the plurality of battery cells 12 are arranged in a direction, when thermal runaway occurs in one of the battery cells 12, that battery cell 12 is referred to as a trigger battery cell, the emission resulting from thermal runaway in the trigger battery cell may be ejected to the inside of the battery 100, causing the surrounding temperature to rise. At this point, the first pressure relief component 125 on a battery cell 12 adjacent thereto may be actuated, and the risk of excessive deformation of the shell 121 of the battery cell 12 adjacent thereto caused by the thermal runaway in the trigger battery cell can be reduced, which could otherwise lead to a short circuit with the trigger battery cell to trigger the risk of thermal runaway. In addition, since the first pressure relief component 125 of the battery cell 12 adjacent to the trigger battery cell is opened, some of the electrolyte of the battery cell 12 adjacent thereto can be evaporated by the heat accumulated around the trigger battery cell, and the risk of thermal runaway simultaneously occurring in the battery cell 12 adjacent to the trigger battery cell can also be relieved. That is, when the battery cell 12 is provided with the first pressure relief component 125 and the second pressure relief component 126, the risk of thermal runaway propagation can be reduced after thermal runaway occurs in one battery cell 12.

In the technical solution of embodiments of the present application, for a single battery cell 12, gas is continuously produced inside the battery cell 12 under normal operating conditions of the battery cell 12; therefore, the configuration of the second pressure relief component 126 may reduce the risk of damage of the shell 121 caused by excessive gas production of the battery cell 12, and the actuation of the second pressure relief component 126 helps to reduce the risk of explosion of the battery cell 12. When thermal runaway occurs in the battery cell 12, the second pressure relief component 126 may be actuated in advance, before the first pressure relief component 125 is actuated, which facilitates in-time pressure relief of the battery cell 12. After the second pressure relief component 126 is actuated, the first pressure relief component 125 may be actuated as the temperature inside the shell 121 rises, thereby increasing the pressure relief area of the battery cell 12, enabling smoother pressure relief of the battery cell 12, and helping to improve the reliability of the battery cell 12. For a plurality of battery cells 12 inside the battery 100, when thermal runaway occurs in one of the battery cells 12, the temperature inside the battery 100 continues to rise as the pressure is released from the battery cell 12 that undergoes thermal runaway, and first pressure relief components 125 of the remaining battery cells 12 may be actuated in advance due to the rise of the external temperature thereof. This helps to reduce the risk of thermal runaway of the remaining battery cells 12 due to heat spreading, thereby reducing the risk of the battery 100 catching fire or even exploding. This helps to improve the reliability of the battery 100.

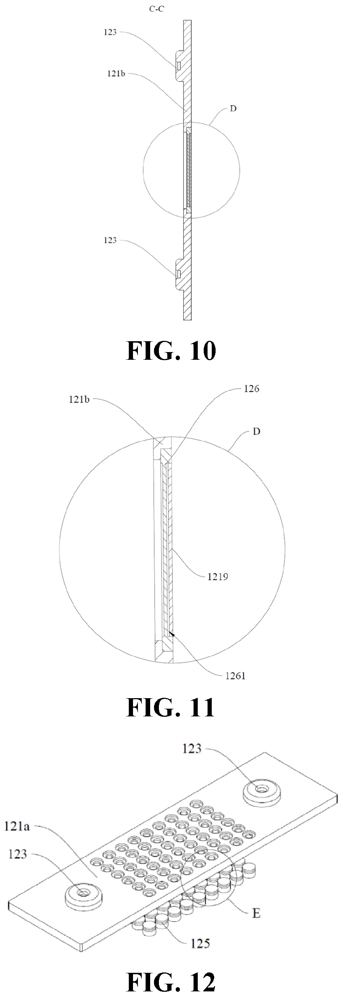

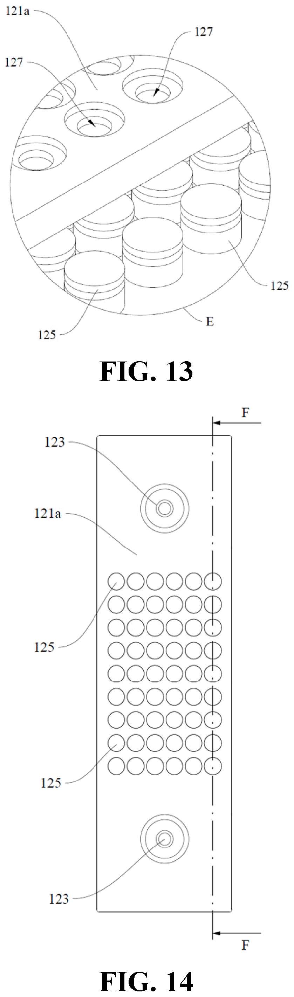

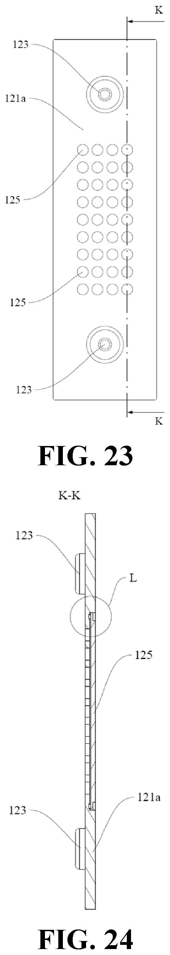

According to some embodiments of the present application, referring to FIGS. 12 to 29, the pressure relief component 125 is configured to melt when the temperature inside the battery cell 12 or outside the battery cell 12 reaches the first threshold value.

When the temperature inside the battery cell 12 rises to the first threshold value due to thermal runaway in the battery cell 12, the first pressure relief component 125 can melt to connect the inside and the outside of the battery cell 12 that undergoes thermal runaway. In normal operation of the battery cell 12, when its external temperature rises to the first threshold value, the first pressure relief component 125 can melt to connect the inside and the outside of the battery cell 12 that is in normal operation.

The melting process is a relatively rapid physical change process, and thus, the approach of actuating the first pressure relief component 125 by melting helps to improve the timeliness of actuation of the first pressure relief component 125.

In the above solution, the first pressure relief component 125 is actuated by melting it, which facilitates in-time pressure relief of the battery cell 12; moreover, the risk that the first pressure relief component 125 cannot be actuated due to its failure is low, which helps to further improve the reliability of the battery cell 12.

According to some embodiments of the present application, referring to FIGS. 12 to 29, the first wall portion 121a has a first pressure relief hole 127, and the first pressure relief component 125 seals the first pressure relief hole 127.

The first pressure relief hole 127 may be integrally formed with the shell 121, or it may be formed on the first wall portion 121a by machining or other means.

The first pressure relief hole 127 may be circular, polygonal, or irregular in shape. The first pressure relief hole 127 may extend along a straight line, a curve, or a broken line.

The first pressure relief component 125 seals the first pressure relief hole 127, which means that the first pressure relief component 125 may block the first pressure relief hole 127 such that the inside and the outside of the shell 121 cannot be in direct communication with each other through the first pressure relief hole 127. The first pressure relief component 125 may be disposed on an outer surface and/or inner surface of the first wall portion 121a to cover the first pressure relief hole 127, or it may fill the first pressure relief hole 127 to block the first pressure relief hole 127.

The first pressure relief component 125 may seal one first pressure relief hole 127 or seal a plurality of first pressure relief holes 127 simultaneously.

In the above solution, the first pressure relief component 125 sealing the first pressure relief hole 127 helps to ensure the battery cell 12 having high sealing performance. After the first pressure relief component 125 is actuated, the first pressure relief hole 127 may form a pressure relief channel having a predetermined track, which facilitates pressure relief from the battery cell 12 in a predetermined direction, making the pressure relief of the battery cell 12 more controllable and reducing the risk of thermal runaway in other battery cells 12 caused by thermal runaway in a single battery cell 12, thereby helping to improve the reliability of the battery 100. Moreover, the first pressure relief component 125 is configured in a way of sealing the first pressure relief hole 127, which results in lower design and manufacturing costs.

According to some embodiments of the present application, referring to FIGS. 3, 12, 26, 30 and 44, a plurality of first pressure relief holes 127 are provided, and the plurality of first pressure relief holes 127 are arranged in an array.

The plurality of first pressure relief holes 127 may be distributed in a circular array, distributed along a rectangular array, or distributed along a predetermined track.

In order to make the pressure relief of the battery cell 12 smoother, the pressure relief component generally needs to have a large pressure relief area. The approach of arranging the plurality of first pressure relief holes 127 in an array while enabling the large pressure relief area helps to reduce the area of the single first pressure relief hole 127, thereby helping to intercept, within the shell 121, particles resulting from thermal runaway in the battery cell 12.

In the above solution, the plurality of first pressure relief holes 127 are arranged in an array. This may reduce the risk of particles igniting flue gas, and also reduce the risk of particles puncturing the remaining battery cells 12 to cause thermal runaway in those battery cells 12, thereby helping to further improve the reliability of the battery 100.

According to some embodiments of the present application, referring to FIGS. 12 to 21, a plurality of first pressure relief holes 127 and a plurality of first pressure relief components 125 are provided, the plurality of first pressure relief holes 127 are spaced apart, the plurality of first pressure relief components 125 are disposed corresponding to the plurality of first pressure relief holes 127, and the first pressure relief components 125 seal the first pressure relief holes 127 corresponding thereto.

When one of the first pressure relief components 125 fails, for example, when its temperature sensitive unit fails, causing a failure in actuation of the first pressure relief component 125, the remaining first pressure relief components 125 will not be affected and may still be actuated normally.

In the above solution, the first pressure relief components 125 seal the first pressure relief holes 127 corresponding thereto. This helps to reduce the risk that the pressure in the battery cell 12 cannot be reliably released due to the failure of one of the first pressure relief components 125, and improves the reliability of the battery cell 12. Moreover, the design of the first pressure relief components 125 sealing the first pressure relief holes 127 corresponding thereto results in low costs.

According to some embodiments of the present application, referring to FIGS. 12 to 21, at least a part of the first pressure relief component 125 is located within the first pressure relief hole 127.

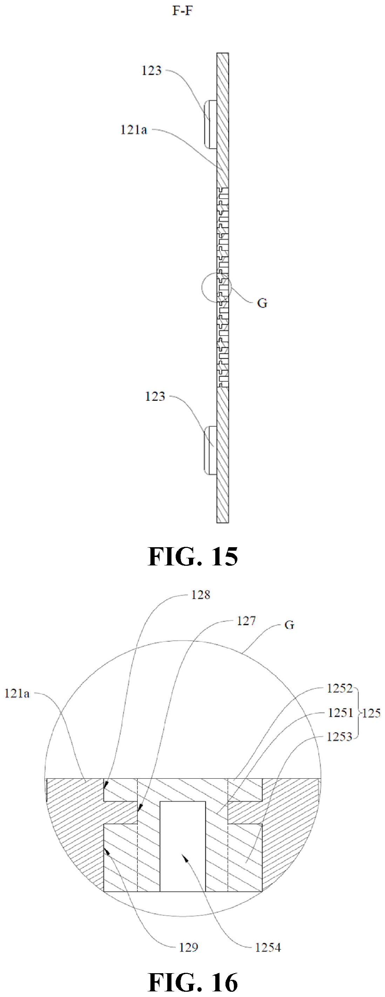

In some embodiments, referring to FIG. 16, the first pressure relief component 125 may fill the first pressure relief hole 127 by injection molding.

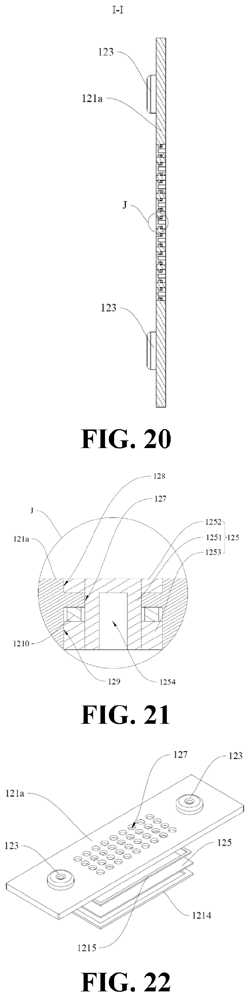

In some embodiments, referring to FIG. 21, the first pressure relief component 125 my fill the first pressure hole by riveting, either on the outer surface of the first wall portion 121a or on the inner surface of the first wall portion 121a.

When a part of the first pressure relief component 125 is located within the first pressure relief hole 127, the other part of the first pressure relief component 125 may extend beyond the outer and/or inner surface of the first wall portion 121a.

In the above solution, the first pressure relief component 125 may share some space of the battery cell 12 with the first wall portion 121a, which helps to increase the volumetric energy density of the battery cell 12.

According to some embodiments of the present application, referring to FIGS. 12 to 21, the first pressure relief component 125 is molded by injection within the first pressure relief hole 127.

The material of the first pressure relief component 125 may include, but is not limited to, polypropylene, polyethylene, and polyphenylene sulfide.

Generally, the first pressure relief component 125 is molded by injection within the first pressure relief hole 127, eliminating the need for additional sealing members between the first pressure relief component 125 and the first pressure relief hole 127.

In the above solution, the first pressure relief component 125 is molded by injection within the first pressure relief hole 127, enabling relatively low processing costs. Besides, the risk of forming a gap between the first pressure relief component 125 and the first pressure relief hole 127 is also low, helping to ensure the battery cell 12 having high sealing performance.

According to some embodiments of the present application, referring to FIGS. 12 to 21, the first pressure relief component 125 includes a main body 1251, a first limiting portion 1252 and a second limiting portion 1253, and at least a part of the main body 1251 is located within the first pressure relief hole 127. The first limiting portion 1252 and the second limiting portion 1253 are respectively connected to two ends of the main body 1251 in a thickness direction of the first wall portion 121a, both the first limiting portion 1252 and the second limiting portion 1253 protrude from an outer peripheral surface of the main body, and a part of the first wall portion 121a is located between the first limiting portion 1252 and the second limiting portion 1253.

In some embodiments, the first wall portion 121a may be provided with a first groove 128 and a second groove 129, where the first pressure relief hole 127 extends through bottom walls of the first groove 128 and the second groove 129, and the first limiting portion 1252 and the second limiting portion 1253 may be formed in the first groove 128 and the second groove 129 simultaneously while a part of the first pressure relief component 125 fills the first pressure relief hole 127 by injection molding.

In some embodiments, the first pressure relief component 125 may be inserted into the first pressure relief hole 127 by riveting. In the process of riveting the first pressure relief component 125 to the first wall portion 121a, the first limiting portion 1252 and the second limiting portion 1253 are formed.

In the thickness direction of the first wall, the first limiting portion 1252 and the second limiting portion 1253 may extend beyond the surface of the first wall portion 121a or be located inside the first wall portion 121a.

The first limiting portion 1252 and the second limiting portion 1253 allow for a more stable combination between the main body 1251 and the first wall portion 121a, thereby improving the stability of fitting between the main body 1251 and the first pressure relief hole 127.

In the above solution, the configuration of the first limiting portion 1252 and the second limiting portion 1253 may reduce the risk of seal failure of the battery cell 12 caused by the gap formed between the main body 1251 and the first pressure relief hole 127 while lowering the assembly difficulty of the first pressure relief component 125.

According to some embodiments of the present application, referring to FIGS. 12 to 21, the first wall portion 121a is provided with a first groove 128 on its outer surface, the first wall portion 121a is provided with a second groove 129 on its inner surface, the first pressure relief hole 127 extends through a bottom wall of the first groove 128 and a bottom wall of the second groove 129, at least a part of the first limiting portion 1252 is located within the first groove 128, and at least a part of the second limiting portion 1253 is located within the second groove 129.

The first groove 128 and the second groove 129 may be formed on the first wall portion 121a by injection molding or machining.

At least a part of the first limiting portion 1252 is located within the first groove 128 and at least a part of the second limiting portion 1253 is located within the second groove 129, which means that the first limiting portion 1252 and the second limiting portion 1253 may share some space with the first wall portion 121a.

In some embodiments, the first limiting portion 1252 is flush with the outer surface of the first wall portion 121a, and the second limiting portion 1253 is flush with the outer surface of the second wall portion 121b. This may reduce the risk of interference between the first pressure relief component 125 and other components within the battery 100, and also help to increase the energy density of the battery cell 12.

In the above solution, the configuration of the first groove 128 and the second groove 129 helps to increase the volumetric energy density of the battery cell 12. Moreover, the first groove 128 and the second groove 129 may serve as an assembly base for the first pressure relief component 125, which helps to lower the assembly difficulty of the first pressure relief component 125.

According to some embodiments of the present application, referring to FIGS. 12 to 21, the battery cell 12 further includes a first sealing member 1210, and in the thickness direction of the first wall portion 121a, the first sealing member 1210 is disposed between the first limiting portion 1252 and the bottom wall of the first groove 128, or the first sealing member 1210 is disposed between the second limiting portion 1253 and the bottom wall of the second groove 129.

Referring to FIG. 21, the first sealing member 1210 is disposed between the second limiting portion 1253 and the bottom wall of the second groove 129.

In some embodiments, the first pressure relief component 125 seals the first pressure relief hole 127 by riveting. Since the use of the riveting connection method carries a high risk of forming a gap between the first pressure relief component 125 and the first pressure relief hole 127, the configuration of the first sealing element 1210 can significantly improve the sealing performance of the battery cell 12.

In the above solution, the configuration of the first sealing member 1210 may reduce the risk of forming the gap between the first wall portion 121a and the first pressure relief component 125 that connects the inside of the shell 121 and the outside of the shell 121, thereby helping to improve the sealing performance of the battery cell 12.

According to some embodiments of the present application, referring to FIGS. 12 to 21, in the thickness direction of the first wall portion 121a, the first pressure relief component 125 has a first surface facing the inside of the shell 121 and a second surface facing away from the inside of the shell 121, the first pressure relief component 125 is provided with a third groove 1254, and the third groove 1254 is recessed from the first surface toward the second surface, or the third groove 1254 is recessed from the second surface toward the first surface.

In some embodiments, the third groove 1254 may be formed by injection molding via a mold.

In some embodiments, the third groove 1254 may be formed naturally after the first pressure relief component 125 and the first wall portion 121a are riveted together.

The configuration of the third groove 1254 is equivalent to reducing the thickness of some areas of the first pressure relief component 125 to a certain extent, so that the first pressure relief component 125 can be actuated more promptly. For example, the time required to melt the first pressure relief component 125 is shorter. For example, the configuration of the third groove 1254 allows the heat to accumulate in some areas the first pressure relief component 125 more easily, enabling the temperature sensitive element to detect the temperature inside the battery cell 12 more promptly.

In the above solution, with the configuration of the third groove 1254, heat tends to accumulate in the part of the first pressure relief component 125 where the third groove 1254 is provided, thereby helping to improve the timeliness of actuation of the first pressure relief component 125.

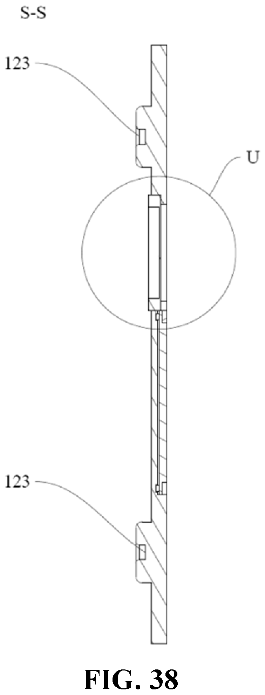

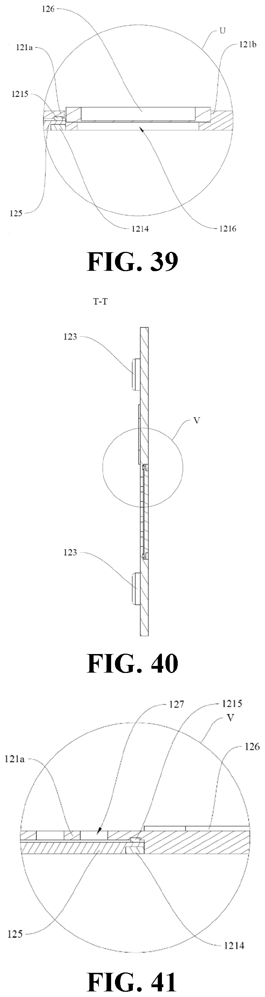

According to some embodiments of the present application, referring to FIGS. 22 to 29 and 36 to 41, a plurality of first pressure relief holes 127 are provided, the plurality of first pressure relief holes 127 are spaced apart, and the first pressure relief component 125 seals the plurality of first pressure relief holes 127.

The first pressure relief component 125 seals the plurality of first pressure relief holes 127, meaning that a single first pressure relief component 125 may seal more than two first pressure relief holes 127. Of course, a single first pressure relief component 125 may also seal all the first pressure relief holes 127.

In some embodiments, two adjacent first pressure relief holes 127 are connected via a channel. After the two adjacent first pressure relief holes 127 are filled simultaneously by injection molding, a single first pressure relief component 125 seals the two first pressure relief holes 127.

In the above solution, since the first pressure relief component 125 seals the plurality of first pressure relief holes 127, heat spreads throughout the inside of the first pressure relief component 125 after the first pressure relief component 125 begins to actuate. This helps to ensure that more of the first pressure relief holes 127 promptly connect the inside and the outside of the shell 121, thereby helping to improve the pressure relief efficiency of the battery cell 12. Furthermore, this helps to reduce the overall mass of the battery cell 12, thereby helping to increase the mass energy density of the battery cell 12. Moreover, this also helps to simplify the assembly process of the battery cell 12 and improve the assembly efficiency of the battery cell 12.

According to some embodiments of the present application, referring to FIGS. 22 to 29 and 36 to 41, the first wall portion 121a has a fourth groove 1213, the fourth groove 1213 is disposed on an outer surface or inner surface of the first wall portion 121a, the first pressure relief holes 127 are disposed on a bottom wall of the fourth groove 1213, and at least a part of the first pressure relief component 125 is accommodated within the fourth groove 1213.

At least a part of the first pressure relief component 125 is accommodated in the fourth groove 1213, meaning that the first pressure relief component 125 may share some space with the first wall portion 121a.

Referring to FIGS. 22 to 25, the fourth groove 1213 is disposed on the inner surface of the first wall portion 121a.

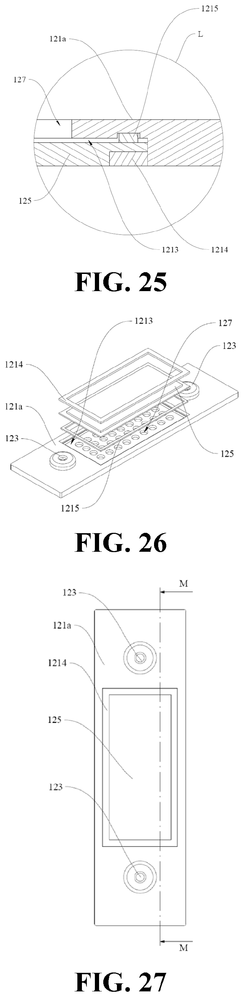

Referring to FIGS. 26 to 29, the fourth groove 1213 is disposed on the outer surface of the first wall portion 121a.

The configuration in the above solution helps to increase the volumetric energy density of the battery cell 12. Moreover, the fourth groove 1213 may serve as an assembly base for the first pressure relief component 125, which helps to lower the assembly difficulty of the first pressure relief component 125.

According to some embodiments of the present application, referring to FIGS. 22 to 29 and 36 to 41, the battery cell 12 further includes a first fixing member 1214, the first fixing member 1214 is connected to the first wall portion 121a, a part of the first pressure relief component 125 is located between the first fixing member 1214 and the bottom wall of the fourth groove 1213 in the thickness direction of the first wall portion 121a, and the first fixing member 1214 is configured to fix the first pressure relief component 125 within the fourth groove 1213.

A plurality of first fixing members 1214 may be provided. A part of the first fixing member 1214 is connected to the first pressure relief component 125, and another part thereof is connected to the bottom wall of the fourth groove 1213, so that the first pressure relief component 125 is fixed within the fourth groove 1213. A single first fixing member 1214 may be provided. For example, the first fixing member 1214 may be in the shape of a cross, ring, or zigzag to press the first pressure relief component 125 against the bottom wall of the fourth groove 1213.

In some embodiments, the first fixing member 1214 may be flush with the surface of the first wall portion 121a.

In some embodiments, the first fixing member 1214 may extend beyond the surface of the first wall portion 121a.

In some embodiments, the first fixing member 1214 may be entirely located within the fourth groove 1213.

The material of the first fixing member 1214 may be the same as or different from the material of the first wall portion 121a. The material of the first fixing member 1214 may include, but is not limited to, copper, iron, aluminum, steel, aluminum alloys, and plastics.

In some embodiments, the first fixing member 1214 is welded to the first wall portion 121a.

In some embodiments, the first fixing member 1214 may be connected to the first wall portion 121a by means of fasteners.

In some embodiments, the first fixing member 1214 may be bonded to the surface of the first wall portion 121a.

In the above solution, the configuration of the first fixing member 1214 may increase the strength of connection between the first pressure relief component 125 and the fourth groove 1213, which helps to reduce the risk of forming a gap between the first pressure relief hole 127 and the first pressure relief component 125 that connects the inside and the outside of the shell 121 due to deformation of the first pressure relief component 125, thereby helping to improve the sealing performance of the battery cell 12.

According to some embodiments of the present application, referring to FIGS. 22 to 29 and 36 to 41, the first fixing member 1214 is annular.

The first fixing member 1214 may be in the shape of a circular ring or a polygonal ring.

After the first pressure relief component 125 is fixed by the annular first fixing member 1214, the force acting on the first pressure relief component 125 is distributed uniformly. This helps to improve structural stability of the first pressure relief component 125 and prolong service life of the first pressure relief component 125.

Compared to a non-annular first fixing member 1214, the inner ring side of the first fixing member 1214 may have a certain amount of space; for example, the inner ring side of the first mixing member 1214 may also accommodate a part of the first pressure relief component 125. This helps to increase the energy density of the battery cell 12.

In the above solution, the first fixing member 1214 has an annular shape, which provides a high strength of connection between the first pressure relief component 125 and the first wall portion 121a while helping to reduce the space occupied by the first fixing member 1214, thereby helping to increase the volumetric energy density of the battery cell 12. Moreover, since the first fixing member 1214 is annular, the risk of the first fixing member 1214 blocking the first pressure relief hole 127 when thermal runaway occurs in the battery cell 12 may be reduced.

According to some embodiments of the present application, referring to FIGS. 22 to 29 and 36 to 41, an outer peripheral surface of the first fixing member 1214 is connected to a side wall of the fourth groove 1213.

The inner side of the fourth groove 1213 may serve to preposition the first fixing member 1214, thereby lowering the assembly difficulty of the first fixing member 1214 and improving its assembly efficiency.

The outer peripheral surface of the first fixing member 1214 is connected to the side wall of the fourth groove 1213, which means that a part of the first fixing member 1214 may be accommodated within the fourth groove 1213.

In the above solution, at least a part of the first fixing member 1214 may be accommodated within the fourth groove 1213, so that the first fixing member 1214 may share some space with the first wall portion 121a, which helps to increase the volumetric energy density of the battery cell 12.

According to some embodiments of the present application, referring to FIGS. 22 to 29 and 36 to 41, the battery cell 12 further includes a second sealing member 1215, the second sealing member 1215 is located between the first pressure relief component 125 and the bottom wall of the fourth groove 1213 in the thickness direction of the first wall portion 121a, and the second sealing member 1215 is disposed around the plurality of first pressure relief holes 127.

In an embodiment where the first pressure relief component 125 is fixed by means of the first fixing member 1214, there is a high risk of forming a gap between the first pressure relief component 125 and the first wall portion 121a. Accordingly, the configuration of the second sealing member 1215 may significantly improve the sealing performance of the battery cell 12.

The second sealing member 1215 is disposed around the plurality of first pressure relief holes 127, which means that the configuration of the second sealing member 1215 may reduce the flow of a foreign object into or out of the battery cell 12 through the junction of the first pressure relief holes 127, the first pressure relief component 125 and the first wall portion 121a.

In the above solution, the configuration of the second sealing member 1215 may reduce the risk of forming a gap between the first pressure relief component 125 and the bottom wall of the fourth groove 1213, thereby helping to improve the sealing performance of the battery cell 12.

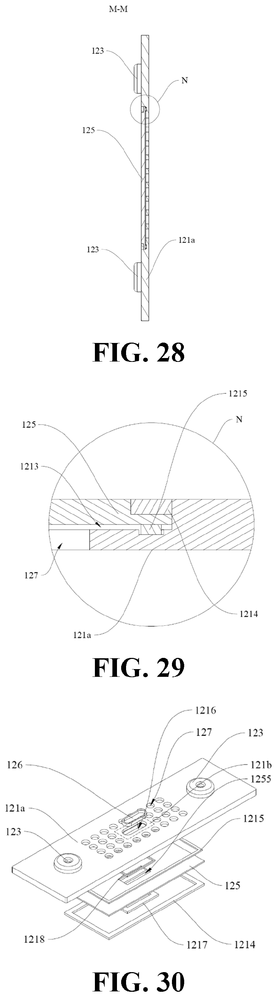

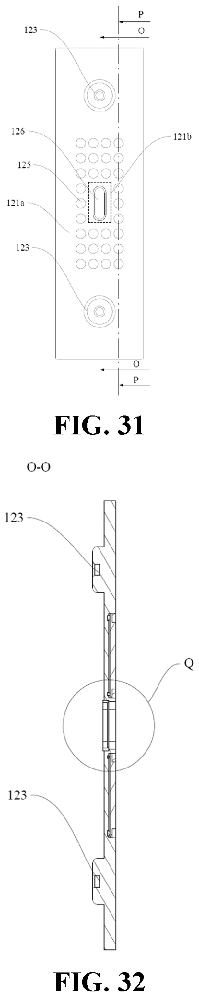

According to some embodiments of the present application, referring to FIGS. 30 to 35, the first wall portion 121a and the second wall portion 121b are located on the same wall of the shell 121, the second wall portion 121b is provided with a second pressure relief hole 1216, the second pressure relief component 126 is mounted in the second pressure relief hole 1216, and the plurality of first pressure relief holes 127 are arranged around the second pressure relief hole 1216.

The first wall portion 121a and the second wall portion 121b are located on the same wall of the shell 121, and the second wall portion 121b is provided with a second pressure relief hole 1216. This means that the first pressure relief holes 127 and the second pressure relief hole 1216 are disposed on the same wall of the shell 121. For example, the first pressure relief holes 127 and the second pressure relief hole 1216 are both disposed d on the end cover 1211.

The second pressure relief hole 1216 may be integrally formed with the shell 121, or it may be formed on the first wall portion 121a by machining or other means.

The second pressure relief hole 1216 may be circular, polygonal, or irregular in shape. The second pressure relief hole 1216 may extend along a straight line, a curve, or a broken line.

The second pressure relief component 126 seals the second pressure relief hole 1216, which means that the second pressure relief component 126 may block the second pressure relief hole 1216 such that the inside and the outside of the shell 121 cannot be in direct communication with each other through the second pressure relief hole 1216. The second pressure relief component 126 may be disposed on an outer surface and/or inner surface of the first wall portion 121a to cover the second pressure relief hole 1216.

In some embodiments, the second pressure relief hole 1216 includes a first hole segment and a second hole segment connected in sequence, a stepped surface is formed at the junction between the first hole segment and the second hole segment, and the second pressure relief component 126 is disposed on the stepped surface.

A plurality of first pressure relief holes 127 are arranged around the second pressure relief hole 1216, which means that heat carried by the emission can more easily spread to the area near the first pressure relief holes 127 as the emission passes through the second pressure relief hole 1216, so that the first pressure relief component 125 can be opened in time.

In the above solution, since both the first pressure relief component 125 and the second pressure relief component 126 are disposed on a wall portion of the shell 121, after the second pressure relief component 126 is actuated, the emission will be discharged out of the shell 121 from the second pressure relief hole 1216, while some of the heat carried by the emission may be transferred more quickly from the wall portion of the shell 121 to the first pressure relief component 125, enabling the first pressure relief component 125 to open in time, thereby helping to further improve the reliability of the battery cell 12.

According to some embodiments of the present application, referring to FIGS. 30 to 35, the first pressure relief component 125 is provided with a first through hole 1255, and a projection of the second pressure relief component 126 at least partially overlaps with the first through hole 1255 in a thickness direction of the second wall portion 121b.

The projection of the second pressure relief component 126 at least partially overlaps with the first through hole 1255, meaning that when the second pressure relief component 126 is actuated, the emission is discharged from the shell 121 via the first through hole 1255 and the second pressure relief hole 1216. This reduces the risk that the first pressure relief component 125 may block the second pressure relief port 1216, resulting in poor effect of pressure relief of the second pressure relief component 126. Moreover, this also means that a through hole may be a pressure relief channel for the second pressure relief component 126. That is, the pressure relief channel for the second pressure relief component 126 to relieve the pressure shares some space with the first pressure relief component 125.

The first through hole 1255 may be disposed at any position of the first pressure relief component 125. For example, in some embodiments, the first through hole 1255 is located at the center of the first pressure relief component 125. For example, in some other embodiments, the first through hole 1255 extends to an edge of the first pressure relief component 125 to form a notch.

In the above solution, the configuration of the first through hole 1255 helps to increase the volumetric energy density of the battery cell 12. Moreover, when the emission flows through the first through hole 1255, some of the heat carried by the emission may spread more quickly on the first pressure relief component 125, allowing more of the first pressure relief holes 127 to connect the inside and the outside of the shell 121 promptly, thereby facilitating in-time opening of the first pressure relief component 125.

According to some embodiments of the present application, referring to FIGS. 30 to 35, the second wall portion 121b has a first boss 1220, the first boss 1220 protrudes from an outer surface or inner surface of the second wall portion 121b, the first boss 1220 is disposed around the second pressure relief hole 1216, and the first pressure relief component 125 sleeves an outer peripheral surface of the first boss 1220 via the first through hole 1255.

The cross section of the first boss 1220 may be in the shape of a circular ring, a polygonal ring, etc.

In some embodiments, the first boss 1220 may be formed by machining an annular groove in the second wall portion 121b.

In some embodiments, the wall of the shell 121 where the first wall portion 121a and the second wall portion 121b are located is provided with a fourth groove 1213. The following description is made by replacing the wall of the shell 121 where the first wall portion 121a and the second wall portion 121b are located with the first wall portion 121a, where the fourth groove 1213 is disposed on an outer surface or inner surface of the first wall portion 121a, the first pressure relief holes 127 are disposed on a bottom wall of the fourth groove 1213, at least a part of the first pressure relief component 125 is accommodated within the fourth groove 1213, the first pressure relief component 125 is provided with a first through hole 1255, the first boss 1220 is disposed on the bottom wall of the fourth groove 1213, the first boss 1220 protrudes from the bottom wall of the fourth groove 1213, the first boss 1220 is disposed around the second pressure relief hole 1216, and the first pressure relief component 125 sleeves an outer peripheral surface of the first boss 1220 via the first through hole 1255.

In the above solution, the first boss 1220 may serve as an assembly base for the first pressure relief component 125. This reduces the assembly difficulty of the first pressure relief component 125.

According to some embodiments of the present application, referring to FIGS. 30 to 35, the battery cell 12 further includes a second fixing member 1217, the second fixing member 1217 is connected to the outer peripheral surface of the first boss 1220, a part of the first pressure relief component 125 is located between the second fixing member 1217 and the second wall portion 121b in the thickness direction of the second wall portion 121b, and the second fixing member 1217 is configured to fix the first pressure relief component 125 onto the second wall portion 121b.

A plurality of second fixing members 1217 may be provided. A part of the second fixing member 1217 is connected to the first pressure relief component 125, and another part thereof is connected to the outer peripheral surface of the first boss, so that the first pressure relief component 125 is fixed onto the outer peripheral surface of the first boss 1220. A single second fixing member 1217 may be provided. For example, the second fixing member 1217 may be annular and press the first pressure relief component 125 against the second wall portion 121b.

In some embodiments, the second fixing member 1217 may be flush with the surface of the first wall portion 121a.

In some embodiments, the second fixing member 1217 may extend beyond the surface of the first wall portion 121a.

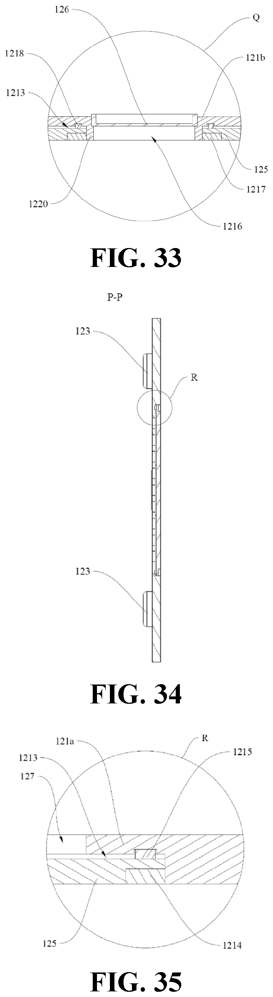

In some embodiments, referring to FIG. 33, the second fixing member 1217 may be entirely located within the fourth groove 1213.

The material of the second fixing member 1217 may be the same as or different from the material of the first wall portion 121a. The material of the second fixing member 1217 may include, but is not limited to, copper, iron, aluminum, steel, aluminum alloys, and plastics.

In some embodiments, the second fixing member 1217 is welded to the boss 1220.

In some embodiments, the second fixing member 1217 may be connected to the first boss 1220 by means of fasteners.

In some embodiments, the second fixing member 1217 may be bonded to the outer peripheral surface of the first boss 1220.

In some embodiments, referring to FIGS. 33 and 35, the wall of the shell 121 where the first wall portion 121a and the second wall portion 121b are located is provided with a fourth groove 1213. The following description is made by replacing the wall of the shell 121 where the first wall portion 121a and the second wall portion 121b are located with the first wall portion 121a, where the fourth groove 1213 is disposed on an outer surface or inner surface of the first wall portion 121a, the first pressure relief holes 127 are disposed on a bottom wall of the fourth groove 1213, at least a part of the first pressure relief component 125 is accommodated within the fourth groove 1213, the first pressure relief component 125 is provided with a first through hole 1255, and the first through hole 1255 forms an inner edge of the first pressure relief component 125. A first boss 1220 is disposed on the bottom wall of the fourth groove 1213; the first boss 1220 protrudes from the bottom wall of the fourth groove 1213; the first boss 1220 is disposed around the second pressure relief hole 1216; and the first pressure relief component 125 sleeves an outer peripheral surface of the first boss 1220 via the first through hole 1255. The second fixing member 1217 is connected to the outer peripheral surface of the first boss 1220, a part of the first pressure relief component 125 is located between the second fixing member 1217 and the second wall portion 121b in the thickness direction of the second wall portion 121b, and the second fixing member 1217 is configured to fix the first pressure relief component 125 onto the second wall portion 121b. In some other embodiments, at least a part of the second fixing member 1217 is located within the fourth groove 1213 in the thickness direction of the first wall portion 121a. In some other embodiments, the battery cell 12 further includes a first fixing member 1214, an outer peripheral surface of the first fixing member 1214 is connected to a side wall of the fourth groove 1213, a part of the first pressure relief component 125 is located between the first fixing member 1214 and the bottom wall of the fourth groove 1213 in the thickness direction of the first wall portion 121a, and the first fixing member 1214 is configured to fix the first pressure relief component 125 within the fourth groove 1213. In some other embodiments, the first fixing member 1214 is located near an outer edge of the first pressure relief component 125, and the second fixing member 1217 is located near an inner edge of the first pressure relief component 125.

In the above solution, the configuration of the second fixing member 1217 may increase the strength of connection between the first pressure relief component 125 and second wall portion 121b, which helps to reduce the risk of forming a gap between the first pressure relief hole 127 and the first pressure relief component 125 that connects the inside and the outside of the shell 121 due to deformation of the first pressure relief component 125, thereby helping to improve the sealing performance of the battery cell 12.

According to some embodiments of the present application, referring to FIGS. 30 to 35, the second fixing member 1217 is annular.

The second fixing member 1217 may be in the shape of a circular ring or a polygonal ring.

After the first pressure relief component 125 is fixed by the annular second fixing member 1217, the force acting on the first pressure relief component 125 is distributed uniformly. This helps to improve structural stability of the first pressure relief component 125 and prolong service life of the first pressure relief component 125.

Compared to a non-annular second fixing member 1217, the inner ring side of the second fixing member 1217 may have a certain amount of space; for example, the inner ring side of the second mixing member 1217 may provide an assembly space for the first boss 1220. This helps to increase the energy density of the battery cell 12.

In the above solution, the second fixing member 1217 has an annular shape, which provides a high strength of connection between the first pressure relief component 125 and the second wall portion 121b while helping to reduce the space occupied by the second fixing member 1217, thereby helping to increase the volumetric energy density of the battery cell 12. Moreover, since the second fixing member 1217 is annular, the risk of the second fixing member 1217 blocking the second pressure relief hole 1216 when thermal runaway occurs in the battery cell 12 may be reduced.

According to some embodiments of the present application, referring to FIGS. 30 to 35, an outer peripheral surface of the second fixing member 1217 is connected to the outer peripheral surface of the first boss 1220.

The outer peripheral surface of the first boss 1220 may serve to preposition the second fixing member 1217, thereby lowering the assembly difficulty of the second fixing member 1217 and improving its assembly efficiency.

In the above solution, the second fixing member 1217 shares some space with the first boss 1220, which helps to increase the volumetric energy density of the battery cell 12. Furthermore, the outer peripheral surface of the first boss 1220 may serve as an assembly base for the second fixing member 1217, facilitating the positioning of the second fixing member 1217 and helping to improve the assembly efficiency of the second fixing member 1217.

According to some embodiments of the present application, referring to FIGS. 30 to 35, the battery cell 12 further includes a third sealing member 1218, the third sealing member 1218 is located between the first pressure relief component 125 and the second wall portion 121b in the thickness direction of the second wall portion 121b, and the third sealing member 1218 is disposed around the first through hole 1255.

In some embodiments, the wall of the shell 121 where the first wall portion 121a and the second wall portion 121b are located is provided with a fourth groove 1213. The following description is made by replacing the wall of the shell 121 where the first wall portion 121a and the second wall portion 121b are located with the first wall portion 121a, where the fourth groove 1213 is disposed on an outer surface or inner surface of the first wall portion 121a, the first pressure relief holes 127 are disposed on a bottom wall of the fourth groove 1213, at least a part of the first pressure relief component 125 is accommodated within the fourth groove 1213, the first pressure relief component 125 is provided with a first through hole 1255, and the first through hole 1255 forms an inner edge of the first pressure relief component 125. A first boss 1220 is disposed on the bottom wall of the fourth groove 1213; the first boss 1220 protrudes from the bottom wall of the fourth groove 1213; the first boss 1220 is disposed around the second pressure relief hole 1216; and the first pressure relief component 125 sleeves an outer peripheral surface of the first boss 1220 via the first through hole 1255. The second fixing member 1217 is connected to the outer peripheral surface of the first boss 1220, a part of the first pressure relief component 125 is located between the second fixing member 1217 and the second wall portion 121b in the thickness direction of the second wall portion 121b, and the second fixing member 1217 is configured to fix the first pressure relief component 125 onto the second wall portion 121b. In some other embodiments, at least a part of the second fixing member 1217 is located within the fourth groove 1213 in the thickness direction of the first wall portion 121a. In some other embodiments, the battery cell 12 further includes a first fixing member 1214, an outer peripheral surface of the first fixing member 1214 is connected to a side wall of the fourth groove 1213, a part of the first pressure relief component 125 is located between the first fixing member 1214 and the bottom wall of the fourth groove 1213 in the thickness direction of the first wall portion 121a, and the first fixing member 1214 is configured to fix the first pressure relief component 125 within the fourth groove 1213. In some other embodiments, the first fixing member 1214 is located near an outer edge of the first pressure relief component 125, and the second fixing member 1217 is located near an inner edge of the first pressure relief component 125. In some other embodiments, the third sealing member 1218 is disposed between the bottom wall of the fourth groove 1213 and the first pressure relief component 125 and is disposed around the first boss 1220.

In some embodiments, the first pressure relief component 125 is provided with a first through hole 1255, and a projection of the second pressure relief component 126 at least partially overlaps with the first through hole 1255 in a thickness direction of the second wall portion 121b. The configuration of the third sealing member 1218 may reduce the risk of seal failure in the battery cell 12 caused by the communication between the inside and the outside of the battery 100 via the first through hole 1255.

In the above solution, the configuration of the third sealing member 1218 may reduce the risk of forming a gap between the first pressure relief component 125 and the second wall portion 121b, thereby helping to improve the sealing performance of the battery cell 12.

According to some embodiments of the present application, the area of the first pressure relief hole 127 is S₁, satisfying: 1 mm²≤S₁≤ 100 mm².

The area of the first pressure relief hole 127 may be any value that is greater than or equal to 1 mm² and less than or equal to 100 mm², for example, 1 mm²,5 mm², 10 mm², 15 mm², 20 mm², 25 mm², 30 mm², 35 mm², 40 mm², 45 mm², 50 mm², 55 mm², 60 mm², 65 mm², 70 mm², 75 mm², 80 mm², 85 mm², 90 mm²,95 mm², and 100 mm².

In the above solution, when S₁≥1 mm², the first pressure relief hole 127 may have a large area, so that the first pressure relief component 125 has a large pressure relief area, which helps to improve the pressure relief efficiency of the battery cell 12; when S₁≤100 mm2, the first wall portion 121a may have a high structural stability, which helps to improve the reliability of the battery cell 12; therefore, when 1 mm²≤S₁≤100 mm², the battery cell 12 may achieve both high pressure relief efficiency and high reliability.

According to some embodiments of the present application, 2 mm²≤S₁≤50 mm² is satisfied.

The area of the first pressure relief hole 127 may be any value that is greater than or equal to 2 mm² and less than or equal to 50 mm², for example, 2 mm², 4 mm², 6 mm², 8 mm², 10 mm², 12 mm², 14 mm², 16 mm², 18 mm², 20 mm², 22 mm², 24 mm², 26 mm², 28 mm², 30 mm², 32 mm², 34 mm², 36 mm², 38 mm², 40 mm², 42 mm², 44 mm², 46 mm², 48 mm², and 50 mm².

In the above solution, when S₁≥2 mm², the area of the first pressure relief hole 127 may be further increased, which helps to further improve the pressure relief efficiency of the battery cell 12; when S₁≤50 mm², the structural stability of the first wall portion 121a may be further improved, which helps to further improve the reliability of the battery cell 12; therefore, when 2 mm²≤S₁≤50 mm², both the pressure relief efficiency and reliability of the battery cell 12 may be further improved.

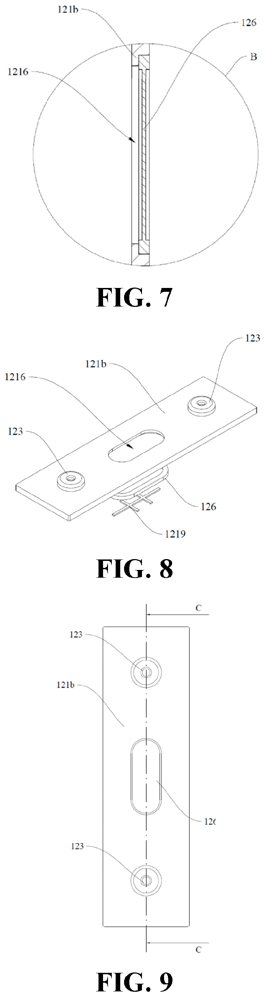

According to some embodiments of the present application, referring to FIGS. 8 and 11, the second pressure relief component 126 includes a body and a filter element 1219, the body has an opening region, the filter element 1219 is disposed on a side of the opening region facing the inside of the shell 121, and the filter element 1219 is configured to divide the opening region into multiple sub-regions.

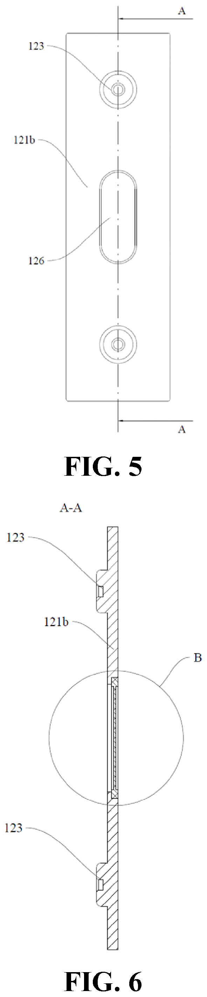

The opening region may be defined by notches on the body. That is, when the internal pressure of the battery cell reaches the second threshold value, the area in the body that can be opened via the boundary of the area enclosed by the notches is the opening region. The opening region may also be defined by the area in the body that is thinner than other parts, or by the area in the body that has a lower melting point than other parts. It can also be understood that the opening region is defined by a weak portion in the second pressure relief component 126; for example, when the internal pressure of the battery cell 12 reaches the second threshold value, the weak portion will rupture,so that the inside and the outside of the shell 121 will be connected via the opening region to help to discharge the emission out of the battery cell 12. In some instances, as shown in FIGS. 4 to 7, the second pressure relief component 126 may be provided with a groove on its outer surface, the weak portion is formed on a bottom wall of the groove; and when the pressure reaches the second threshold, the bottom wall of the groove is thin relatively and accordingly is easy to rupture.

The material of the filter element 1219 may be the same as or different from the material of the shell 121.

The material of the filter element 1219 may include, but is not limited to, copper, iron, aluminum, steel, aluminum alloys, and plastics.

The filter element 1219 may be in the form of a mesh or constructed as multiple non-intersecting twigs.

The filter element 1219 may be connected to the body by welding, bonding, fasteners, or other means.

In some embodiments, referring to FIG. 8, by the filter element 1219, the large-area opening region may be divided into multiple small-area sub-regions, which helps to intercept large-volume particles in the emission inside the shell 121, and allows high-temperature high-pressure gas to be discharged smoothly from the sub-regions and the second relief hole 1216 to the outside of the shell 121.

In some embodiments, referring to FIG. 11, a gap is provided between the filter element 1219 and the body in the thickness direction of the second wall portion 121b, which means that, to a certain extent, the filter element 1219 does not interfere with exhaust of the gas, that is, the area through which gas is discharged from the inside of the shell 121 to the outside of the shell 121 is not reduced.

In the above solution, the configuration of the filter element 1219 may allow the battery cell 12 to have a large pressure relief area while helping to intercept, within the shell 121, particles resulting from thermal runaway in the battery cell 12. This may reduce the risk of particles igniting flue gas, and also reduce the risk of particles puncturing the remaining battery cells 12 to cause thermal runaway in those battery cells 12, thereby helping to further improve the reliability of the battery 100.

According to some embodiments of the present application, referring to FIGS. 8 and 11, a fifth groove 1261 is disposed on a side of the second pressure relief component 126 facing the inside of the shell 121, the opening region is formed on a bottom wall 12121 of the fifth groove 1261, at least a part of the filter element 1219 is accommodated within the fifth groove 1261, and the filter element 1219 is connected to a side wall of the fifth groove 1261.

The fifth groove 1261 may be machined together with the second wall portion 121b, for example, by casting. It may also be formed separately from the second wall portion 121b, for example, by machining.

At least a part of the filter element 1219 is accommodated within the fifth groove 1261, meaning that the filter element 1219 may share some space with the fifth groove 1261.

In the above solution, at least a part of the filter element 1219 is accommodated within the fifth groove 1261, thereby helping to decrease the volumetric energy density of the battery cell 12; moreover, the side wall of the fifth groove 1261 may serve as an assembly base for the filter element 1219, which helps to simplify the assembly of the filter element 1219 and improve the assembly efficiency of the battery cell 12.

According to some embodiments of the present application, the area of the sub-region is S₂, satisfying: 1 mm²≤S₂≤400 mm².

The area of the sub-region may be any value that is greater than or equal to 1 mm² and less than or equal to 400 mm², for example, 1 mm², 10 mm², 20 mm², 30 mm², 40 mm², 50 mm², 60 mm², 70 mm², 80 mm², 90 mm², 100 mm², 110 mm², 120 mm², 130 mm², 140 mm², 150 mm², 160 mm², 170 mm², 180 mm², 190 mm², 200 mm², 210 mm², 220 mm², 230 mm², 240 mm², 250 mm², 260 mm², 270 mm², 280 mm², 290 mm², 300 mm², 310 mm², 320 mm², 330 mm², 340 mm², 350 mm², 360 mm², 370 mm², 380 mm², 390 mm², and 400 mm².

In the above solution, when S₂≥1 mm², the sub-region may have a large area, so that the second pressure relief component 126 may have a large pressure relief area, which helps to improve the pressure relief efficiency of the battery cell 12; when S₂≤ 400 mm2, it is conducive to intercepting relatively small particles within the shell 121, thereby reducing the risk that particles ejected from the shell 1211 to cause thermal runaway in the remaining battery cells 12 and to ignite the flue gas, and helping to improve the reliability of the battery cell 12; therefore, when 1 mm²≤S₂≤ 400 mm², the battery cell 12 may achieve both high pressure relief efficiency and high reliability.

According to some embodiments of the present application, 2 mm²≤S₂≤200 mm² is satisfied.

The area of the sub-region may be any value that is greater than or equal to 2 mm² and less than or equal to 200 mm², for example, 2 mm², 5 mm², 10 mm², 15 mm², 20 mm², 25 mm², 30 mm², 35 mm², 40 mm², 45 mm², 50 mm², 55 mm², 60 mm², 65 mm², 70 mm², 75 mm², 80 mm², 85 mm², 90 mm², 95 mm², 100 mm², 105 mm², 110 mm², 115 mm², 120 mm², 125 mm², 130 mm², 135 mm², 140 mm², 145 mm², 150 mm², 155 mm², 160 mm², 165 mm², 170 mm², 175 mm², 180 mm², 185 mm², 190 mm², 195 mm², and 200 mm².

In the above solution, when S₂≥2 mm², the area of the sub-region may be further increased, so that the second pressure relief component 126 has a large pressure relief area, which helps to further improve the pressure relief efficiency of the battery cell 12; when S₂≤200 mm², it is conducive to intercepting smaller particles within the shell 121, thereby further reducing the risk that particles are ejected from the shell 121 to cause thermal runaway in the remaining battery cells 12 and to ignite the flue gas, and helping to improve the reliability of the battery cell 12; therefore, when 2 mm²≤S₂≤200 mm², the pressure relief efficiency of the battery cell 12 may be further improved while the risk that particles are ejected from the shell 121 to cause thermal runaway in the remaining battery cells 12 and to ignite the flue gas may be further reduced.

According to some embodiments of the present application, the first threshold value is T, satisfying: 95°C≤T≤300°C.

The first threshold value may be any value that is greater than or equal to 95°C and less than or equal to 300°C, for example, 95°C, 100°C, 105°C, 110°C, 115°C, 120°C, 125°C, 130°C, 135°C, 140°C, 145°C, 150°C, 155°C, 160°C, 165°C, 170°C, 175°C, 180°C, 185°C, 190°C, 195°C, 200°C, 205°C, 210°C, 215°C, 220°C, 225°C, 230°C, 235°C, 240°C, 245°C, 250°C, 255°C, 260°C, 265°C, 270°C, 275°C, 280°C, 285°C, 290°C, 295°C, and 300°C.

According to some embodiments of the present application, the second threshold value is P, satisfying: 0.3 MPa≤P≤2.3 MPa.

The second threshold value may be any value that is greater than or equal to 0.3 MPa and less than or equal to 2.3 MPa, for example, 0.3 MPa, 0.6 MPa, 0.9 MPa, 1.2 MPa, 1.5 MPa, 1.8 MPa, and 2.3 MPa.

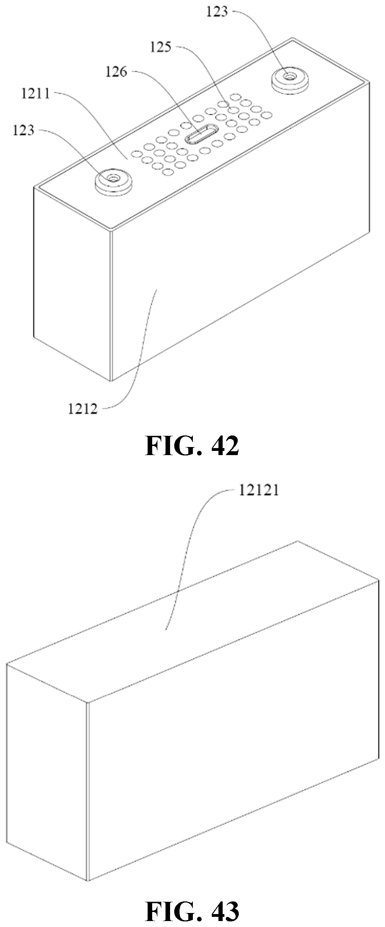

According to some embodiments of the present application, referring to FIGS. 42 and 43, the shell 121 includes a case 1212 and an end cover 1211, the case 1212 includes a bottom wall 12121 and a side wall surrounding the bottom wall 12121, one end of the side wall is connected to the bottom wall 12121, the other end of the side wall encloses to form an opening, and the end cover 1211 is configured to cover the opening. The end cover 1211 is provided with the first pressure relief component 125 and the second pressure relief component 126.

In some embodiments, electrode terminals 123 are also disposed on the end cover 1211. There are two end covers 1211, and two electrode terminals 123 are spaced apart. In some other embodiments, the first pressure relief component 125 and the second pressure relief component 126 are disposed between the two electrode terminals 123.

The end cover 1211 is generally plate-shaped, so the deformation caused by the installation of the first pressure relief component 125 and the second pressure relief component 126 is small. Furthermore, the first pressure relief component 125 and the second pressure relief component 126 may be mounted on the end cover 1211 first, and then the end cover 1211 seals the opening of the shell 1212. This makes the assembly easy.

In the above solution, the first pressure relief component 125 and the second pressure relief component 126 are disposed on the end cover 1211, which facilitates the machining and lowers the assembly difficulty of the first pressure relief component 125 and the second pressure relief component 126.

According to some embodiments of the present application, referring to FIGS. 44 and 45, the bottom wall 12121 is provided with the first pressure relief component 125.

The bottom wall 12121 is also provided with the first pressure relief component 125, which means that when the internal or external temperature of the battery cell 12 reaches the second threshold value, the pressure relief area of the battery cell 12 is further increased.

In the above solution, since the bottom wall 12121 is also provided with the first pressure relief component 125, the pressure relief area of the battery cell 12 can be further increased, thereby improving the pressure relief efficiency of the battery cell 12.

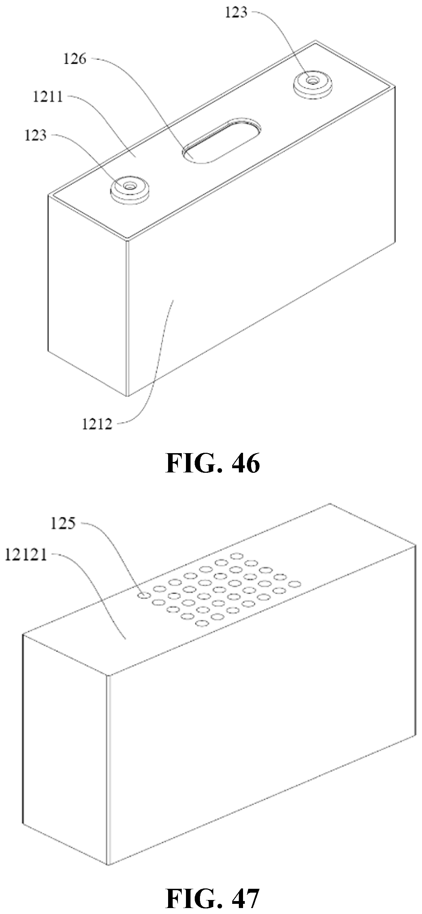

According to some embodiments of the present application, referring to FIGS. 46 and 47, the shell 121 includes a case 1212 and an end cover 1211, the case 1212 includes a bottom wall 12121 and a side wall surrounding the bottom wall 12121, one end of the side wall is connected to the bottom wall 12121, the other end of the side wall encloses to form an opening, and the end cover 1211 is configured to cover the opening. The end cover 1211 is provided with the second pressure relief component 126, and the bottom wall 12121 is provided with the first pressure relief component 125.

The second pressure relief component 126 and the first pressure relief components 125 are disposed on two different walls of the shell 121. This helps to improve the overall structural strength of the shell 121, also increases the area of the shell 121 available for mounting the second pressure relief component 126 and the first pressure relief components 125, thereby lowering the assembly difficulty.

Since the bottom wall 12121 and the end cover 1211 are disposed opposite each other, the emission can be discharged outward in a substantially straight line, which helps to reduce the risk of excessive deformation of the shell 121.

In the above solution, the second pressure relief component 126 and the first pressure relief components 125 are disposed on the end cover 1211 and the bottom wall 12121 respectively. This simplifies the assembly of the first pressure relief components 125 and the second pressure relief component 126 and, to some extent, may increase the structural strength of the end cover 1211.

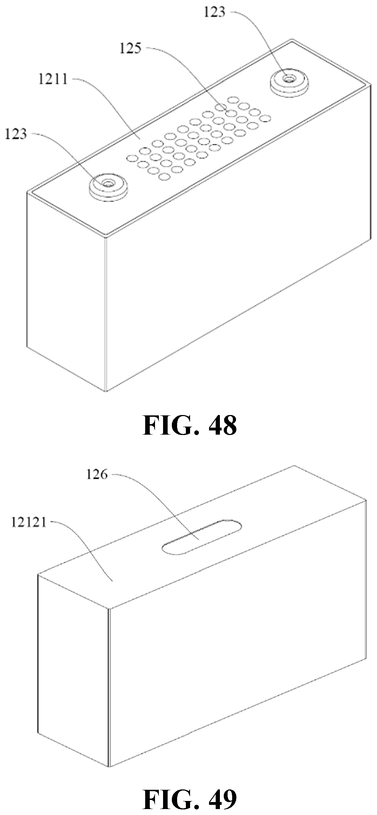

According to some embodiments of the present application, referring to FIGS. 48 and 49, the shell 121 includes a case 1212 and an end cover 1211, the case 1212 includes a bottom wall 12121 and a side wall surrounding the bottom wall 12121, one end of the side wall is connected to the bottom wall 12121, the other end of the side wall encloses to form an opening, and the end cover 1211 is configured to cover the opening. The end cover 1211 is provided with the first pressure relief components 125, and the bottom wall 12121 is provided with the second pressure relief component 126.

In some embodiments, the end cover 1211 is further provided with two electrode terminals 123, and a plurality of first pressure relief components 125 are disposed between the two electrode terminals 123. The configuration of the two electrode terminals 123 may increase the structural strength of the end cover 1211 to a certain extent, so that the end cover 1211 may still have a high strength even when it is provided with the plurality of first pressure relief components 125.

In the above solution, the second pressure relief component 126 and the first pressure relief components 125 are disposed on the end cover 1211 and the bottom wall 12121 respectively. This simplifies the assembly of the first pressure relief components 125 and the second pressure relief component 126. Moreover, the first pressure relief components 125 are disposed on the end cover 1211 such that the case 1212 has a high structural strength.

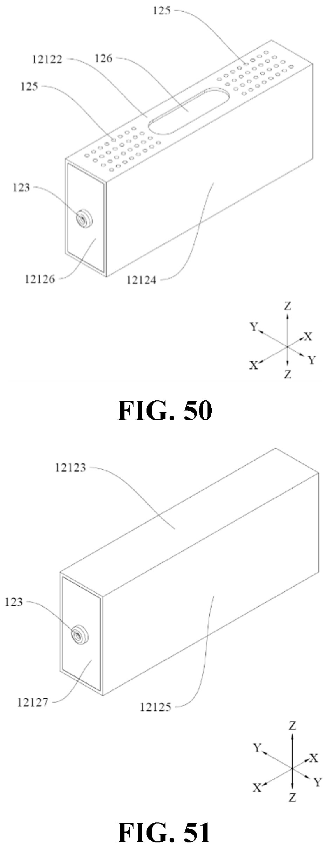

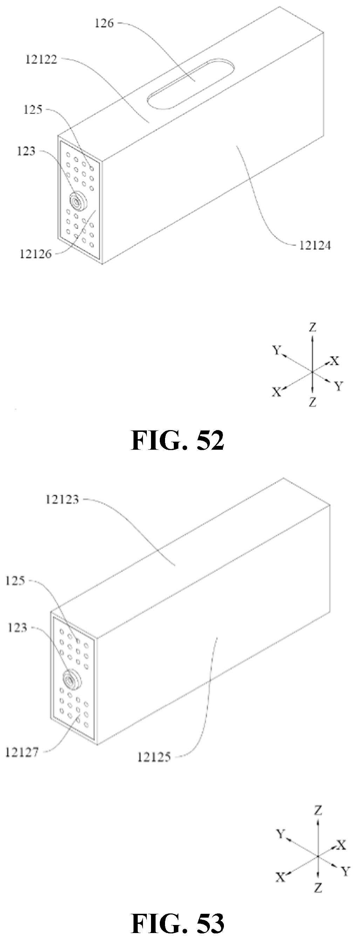

According to some embodiments of the present application, referring to FIGS. 50 and 53, the shell 121 includes a case 1212, a first end cover 12126 and a second end cover 12127, the case 1212 includes a third side wall 12122 and a fourth side wall 12123 disposed opposite each other in a third direction Z, as well as a first side wall 12124 and a second side wall 12125 disposed opposite each other in a second direction Y, the third side wall 12122, the fourth side wall 12123, the first side wall 12124 and the second side wall 12125 enclose to form an accommodating cavity having a first opening and a second opening, the first opening and the second opening are disposed opposite each other in a first direction X, the first end cover 12126 is configured to cover the first opening, the second end cover 12127 is configured to cover the second opening, and the first direction X, the second direction Y and the third direction Z are perpendicular to one another. The third side wall 12122 is provided with the second pressure relief component 126, and both the first end cover 12126 and the second end cover 12127 are provided with the first pressure relief component 125.

In some other embodiments, the third side wall 12122 is provided with the first pressure relief component 125 and the second pressure relief component 126.

The first pressure relief components 125 may be disposed on the first end cover 12126 and the second end cover 12127 in advance, the first end cover 12126 seals the first opening, and the second end cover 12127 seals the second opening. This makes the assembly relatively easy.

In some embodiments, the battery cell 12 further includes two electrode terminals 123, where one electrode terminal 123 is disposed on the first end cover 12126 and the other electrode terminal 123 is disposed on the second end cover 12127.

In the above solution, the second pressure relief component 126 is disposed on the third side wall 12122 while the first pressure relief components 125 are disposed on the first end cover 12126 and second end cover 12127 respectively. This simplifies the assembly of the first pressure relief components 125. Moreover, the second pressure relief component 126 is disposed on the third side wall 12122, which helps to ensure that the shell 121 has a specific pressure relief area while maintaining a high strength.

According to some embodiments of the present application, the present application further provides a battery 100, referring to FIG. 2, including a battery cell 12 in one or more of the embodiments described above.

In the above solution, since the battery cell 12 in one or more of the embodiments described above has high reliability, the battery 100 including the battery cell 12 in one or more of the embodiments described above also has high reliability.

The present application provides an electrical device, referring to FIG. 1, which includes a battery cell 12 in one or more of the embodiments described above, or a battery 100 in one or more of the embodiments described above, where the battery cell 12 or the battery 100 is configured to supply electric energy.

In the above solution, since the battery cell 12 in one or more of the embodiments described above or the battery 100 in one or more of the embodiments described above has high reliability, the electrical device including the battery cell 12 in one or more of the embodiments described above or the battery 100 in one or more of the embodiments described above also has high reliability.

According to some embodiments of the present application, referring to FIGS. 12 to 16, the present application provides a battery cell 12, the battery cell 12 includes a shell 121, a first pressure relief component 125 and a second pressure relief component 126, where the first pressure relief component 125 is disposed on a first wall portion 121a of the shell 121, and the first pressure relief component 125 is configured to rupture when the temperature inside the battery cell 12 or outside the battery cell 12 reaches a first threshold value. The second pressure relief component 126 is disposed on a second wall portion 121b of the shell 121, and the second pressure relief component 126 is configured to melt when the pressure inside the battery cell 12 reaches a second threshold value. The shell 121 includes a case 1212 and an end cover 1211, the case 1212 includes a bottom wall 12121 and a side wall surrounding the bottom wall 12121, one end of the side wall is connected to the bottom wall 12121, the other end of the side wall encloses to form an opening, and the end cover 1211 is configured to cover the opening. The first wall portion 121a is located on the end cover 1211. The end cover 1211 has a first pressure relief hole 127, and the first pressure relief component 125 seals the first pressure relief hole 127. A plurality of first pressure relief holes 127 are provided, and the plurality of first pressure relief holes 127 are arranged in an array. A plurality of first pressure relief holes 127 and a plurality of first pressure relief components 125 are provided, the plurality of first pressure relief holes 127 are spaced apart, the plurality of first pressure relief components 125 are disposed corresponding to the plurality of first pressure relief holes 127, and the first pressure relief components 125 seal the first pressure relief holes 127 corresponding thereto. The first pressure relief component 125 is molded by injection within the first pressure relief hole 127. The first pressure relief component 125 includes a main body 1251, a first limiting portion 1252 and a second limiting portion 1253, and at least a part of the main body 1251 is located within the first pressure relief hole 127. The first limiting portion 1252 and the second limiting portion 1253 are respectively connected to two ends of the main body 1251 in a thickness direction of the end cover 1211, both the first limiting portion 1252 and the second limiting portion 1253 protrude from an outer peripheral surface of the main body, and a part of the end cover 1211 is located between the first limiting portion 1252 and the second limiting portion 1253. The end cover 1211 is provided with a first groove 128 on its outer surface, the end cover 1211 is provided with a second groove 129 on its inner surface, the first pressure relief hole 127 extends through a bottom wall of the first groove 128 and a bottom wall of the second groove 129, at least a part of the first limiting portion 1252 is located within the first groove 128, and at least a part of the second limiting portion 1253 is located within the second groove 129.

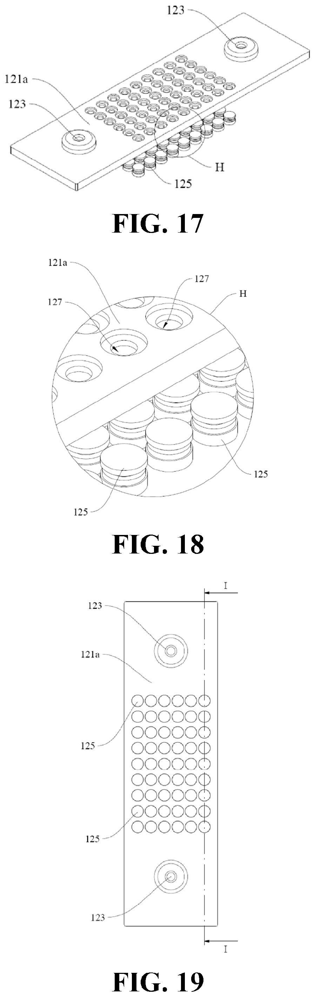

According to some embodiments of the present application, referring to FIGS. 17 to 21, the present application provides a battery cell 12, the battery cell 12 includes a shell 121, a first pressure relief component 125 and a second pressure relief component 126, where the first pressure relief component 125 is disposed on a first wall portion 121a of the shell 121, and the first pressure relief component 125 is configured to rupture when the temperature inside the battery cell 12 or outside the battery cell 12 reaches a first threshold value. The second pressure relief component 126 is disposed on a second wall portion 121b of the shell 121, and the second pressure relief component 126 is configured to melt when the pressure inside the battery cell 12 reaches a second threshold value. The shell 121 includes a case 1212 and an end cover 1211, the case 1212 includes a bottom wall 12121 and a side wall surrounding the bottom wall 12121, one end of the side wall is connected to the bottom wall 12121, the other end of the side wall encloses to form an opening, and the end cover 1211 is configured to cover the opening. The first wall portion 121a is located on the end cover 1211. The end cover 1211 has a first pressure relief hole 127, and the first pressure relief component 125 seals the first pressure relief hole 127. A plurality of first pressure relief holes 127 are provided, and the plurality of first pressure relief holes 127 are arranged in an array. A plurality of first pressure relief holes 127 and a plurality of first pressure relief components 125 are provided, the plurality of first pressure relief holes 127 are spaced apart, the plurality of first pressure relief components 125 are disposed corresponding to the plurality of first pressure relief holes 127, and the first pressure relief components 125 seal the first pressure relief holes 127 corresponding thereto. The first pressure relief component 125 is molded by injection within the first pressure relief hole 127. The first pressure relief component 125 includes a main body 1251, a first limiting portion 1252 and a second limiting portion 1253, and at least a part of the main body 1251 is located within the first pressure relief hole 127. The first limiting portion 1252 and the second limiting portion 1253 are respectively connected to two ends of the main body 1251 in a thickness direction of the end cover 1211, both the first limiting portion 1252 and the second limiting portion 1253 protrude from an outer peripheral surface of the main body, and a part of the end cover 1211 is located between the first limiting portion 1252 and the second limiting portion 1253. The end cover 1211 is provided with a first groove 128 on its outer surface, the end cover 1211 is provided with a second groove 129 on its inner surface, the first pressure relief hole 127 extends through a bottom wall of the first groove 128 and a bottom wall of the second groove 129, at least a part of the first limiting portion 1252 is located within the first groove 128, and at least a part of the second limiting portion 1253 is located within the second groove 129. The battery cell 12 further includes a first sealing member 1210. The first sealing member 1210 is disposed between the second limiting portion 1253 and the bottom wall of the second groove 129 in the thickness direction of the end cover 1211.

According to some embodiments of the present application, referring to FIGS. 4 to 11, the present application provides a battery cell 12, the battery cell 12 includes a shell 121, a first pressure relief component 125 and a second pressure relief component 126, where the first pressure relief component 125 is disposed on a first wall portion 121a of the shell 121, and the first pressure relief component 125 is configured to rupture when the temperature inside the battery cell 12 or outside the battery cell 12 reaches a first threshold value. The second pressure relief component 126 is disposed on a second wall portion 121b of the shell 121, and the second pressure relief component 126 is configured to melt when the pressure inside the battery cell 12 reaches a second threshold value. The shell 121 includes a case 1212 and an end cover 1211, the case 1212 includes a bottom wall 12121 and a side wall surrounding the bottom wall 12121, one end of the side wall is connected to the bottom wall 12121, the other end of the side wall encloses to form an opening, and the end cover 1211 is configured to cover the opening. The second wall portion 121b is located on the end cover 1211. The second pressure relief component 126 includes a body and a filter element 1219, the body has an opening region, the filter element 1219 is disposed on a side of the opening region facing the inside of the shell 121, and the filter element 1219 is configured to divide the opening region into multiple sub-regions. A fifth groove 1261 is disposed on a side of the second pressure relief component 126 facing the inside of the shell 121, the opening region is formed on a bottom wall 12121 of the fifth groove 1261, at least a part of the filter element 1219 is accommodated within the fifth groove 1261, and the filter element 1219 is connected to a side wall of the fifth groove 1261.

According to some embodiments of the present application, referring to FIGS. 22 to 29, the present application provides a battery cell 12, the battery cell 12 includes a shell 121, a first pressure relief component 125 and a second pressure relief component 126, where the first pressure relief component 125 is disposed on a first wall portion 121a of the shell 121, and the first pressure relief component 125 is configured to rupture when the temperature inside the battery cell 12 or outside the battery cell 12 reaches a first threshold value. The second pressure relief component 126 is disposed on a second wall portion 121b of the shell 121, and the second pressure relief component 126 is configured to melt when the pressure inside the battery cell 12 reaches a second threshold value. The shell 121 includes a case 1212 and an end cover 1211, the case 1212 includes a bottom wall 12121 and a side wall surrounding the bottom wall 12121, one end of the side wall is connected to the bottom wall 12121, the other end of the side wall encloses to form an opening, and the end cover 1211 is configured to cover the opening. The first wall portion 121a is located on the end cover 1211. The end cover 1211 has a fourth groove 1213, the fourth groove 1213 is disposed on the outer surface or inner surface of the end cover 1211, the first pressure relief holes 127 are disposed on a bottom wall of the fourth groove 1213, and at least a part of the first pressure relief component 125 is accommodated within the fourth groove 1213. The battery cell 12 further includes a first fixing member 1214, a part of the first pressure relief component 125 is located between the first fixing member 1214 and the bottom wall of the fourth groove 1213 in the thickness direction of the end cover 1211, and the first fixing member 1214 is configured to fix the first pressure relief component 125 within the fourth groove 1213. The first fixing member 1214 is annular. An outer peripheral surface of the first fixing member 1214 is connected to a side wall of the fourth groove 1213. The battery cell 12 further includes a second sealing member 1215, the second sealing member 1215 is located between the first pressure relief component 125 and the bottom wall of the fourth groove 1213 in the thickness direction of the end cover 1211, and the second sealing member 1215 is disposed around the plurality of first pressure relief holes 127.

According to some embodiments of the present application, referring to FIGS. 30 to 35, the present application provides a battery cell 12, the battery cell 12 includes a shell 121, a first pressure relief component 125 and a second pressure relief component 126, where the first pressure relief component 125 is disposed on a first wall portion 121a of the shell 121, and the first pressure relief component 125 is configured to rupture when the temperature inside the battery cell 12 or outside the battery cell 12 reaches a first threshold value. The second pressure relief component 126 is disposed on a second wall portion 121b of the shell 121, and the second pressure relief component 126 is configured to melt when the pressure inside the battery cell 12 reaches a second threshold value. The shell 121 includes a case 1212 and an end cover 1211, the case 1212 includes a bottom wall 12121 and a side wall surrounding the bottom wall 12121, one end of the side wall is connected to the bottom wall 12121, the other end of the side wall encloses to form an opening, and the end cover 1211 is configured to cover the opening. The first wall portion 121a and the second wall portion 121b are both located on the end cover 1211. The end cover 1211 has a fourth groove 1213, the fourth groove 1213 is disposed on the outer surface or inner surface of the end cover 1211, the first pressure relief holes 127 and the second pressure relief hole 1216 are both disposed on a bottom wall of the fourth groove 1213, a plurality of first pressure relief holes 127 are disposed around the second pressure relief hole 1216, and the second pressure relief component 126 is mounted in the second pressure relief hole 1216.

At least a part of the first pressure relief component 125 is accommodated within the fourth groove 1213. The battery cell 12 further includes a first fixing member 1214, a part of the first pressure relief component 125 is located between the first fixing member 1214 and the bottom wall of the fourth groove 1213 in the thickness direction of the end cover 1211, and the first fixing member 1214 is configured to fix the first pressure relief component 125 within the fourth groove 1213. The first fixing member 1214 is annular. An outer peripheral surface of the first fixing member 1214 is connected to a side wall of the fourth groove 1213. The battery cell 12 further includes a second sealing member 1215, the second sealing member 1215 is located between the first pressure relief component 125 and the bottom wall of the fourth groove 1213 in the thickness direction of the end cover 1211, and the second sealing member 1215 is disposed around the plurality of first pressure relief holes 127. The first pressure relief component 125 is provided with a first through hole 1255, the first through hole 1255 is located at the center of the first pressure relief component 125, and a projection of the second pressure relief component 126 at least partially overlaps with the first through hole 1255 in a thickness direction of the second wall portion 121b. The second wall portion 121b has a first boss 1220, the first boss 1220 protrudes from an outer surface or inner surface of the second wall portion 121b, the first boss 1220 is disposed around the second pressure relief hole 1216, and the first pressure relief component 125 sleeves an outer peripheral surface of the first boss 1220 via the first through hole 1255. The battery cell 12 includes a second fixing member 1217, the second fixing member 1217 is connected to the outer peripheral surface of the first boss 1220, a part of the first pressure relief component 125 is located between the second fixing member 1217 and the second wall portion 121b in the thickness direction of the second wall portion 121b, and the second fixing member 1217 is configured to fix the first pressure relief component 125 onto the second wall portion 121b. The second fixing member 1217 is annular. An outer peripheral surface of the second fixing member 1217 is connected to the outer peripheral surface of the first boss 1220. The battery cell 12 further includes a third sealing member 1218, the third sealing member 1218 is located between the first pressure relief component 125 and the second wall portion 121b in the thickness direction of the second wall portion 121b, and the third sealing member 1218 is disposed around the first through hole 1255.

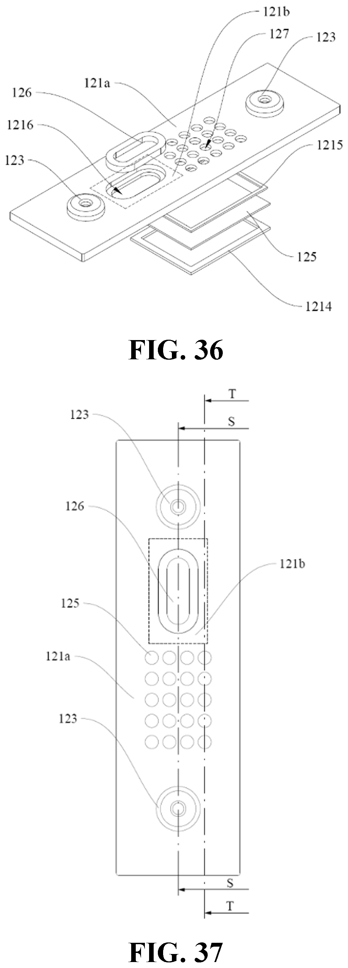

According to some embodiments of the present application, referring to FIGS. 36 to 41, the present application provides a battery cell 12, the battery cell 12 includes a shell 121, a first pressure relief component 125 and a second pressure relief component 126, where the first pressure relief component 125 is disposed on a first wall portion 121a of the shell 121, and the first pressure relief component 125 is configured to rupture when the temperature inside the battery cell 12 or outside the battery cell 12 reaches a first threshold value. The second pressure relief component 126 is disposed on a second wall portion 121b of the shell 121, and the second pressure relief component 126 is configured to melt when the pressure inside the battery cell 12 reaches a second threshold value. The shell 121 includes a case 1212 and an end cover 1211, the case 1212 includes a bottom wall 12121 and a side wall surrounding the bottom wall 12121, one end of the side wall is connected to the bottom wall 12121, the other end of the side wall encloses to form an opening, and the end cover 1211 is configured to cover the opening. The first wall portion 121a and the second wall portion 121b are both located on the end cover 1211. The end cover 1211 has a fourth groove 1213, the fourth groove 1213 is disposed on the outer surface or inner surface of the end cover 1211, and the first pressure relief holes 127 are disposed on a bottom wall of the fourth groove 1213. The end cover 1211 is also provided with a second pressure relief hole 1216. A plurality of first pressure relief holes 127 are spaced apart from the second pressure relief hole 1216. The second pressure relief component 126 is mounted in the second pressure relief hole 1216.

The end cover 1211 has a fourth groove 1213, the fourth groove 1213 is disposed on the outer surface or inner surface of the end cover 1211, the first pressure relief holes 127 are disposed on a bottom wall of the fourth groove 1213, and at least a part of the first pressure relief component 125 is accommodated within the fourth groove 1213. The battery cell 12 further includes a first fixing member 1214, a part of the first pressure relief component 125 is located between the first fixing member 1214 and the bottom wall of the fourth groove 1213 in the thickness direction of the end cover 1211, and the first fixing member 1214 is configured to fix the first pressure relief component 125 within the fourth groove 1213. The first fixing member 1214 is annular. An outer peripheral surface of the first fixing member 1214 is connected to a side wall of the fourth groove 1213. The battery cell 12 further includes a second sealing member 1215, the second sealing member 1215 is located between the first pressure relief component 125 and the bottom wall of the fourth groove 1213 in the thickness direction of the end cover 1211, and the second sealing member 1215 is disposed around the plurality of first pressure relief holes 127. The second pressure relief component 126 includes a body, which is mounted in the second pressure relief hole 1216. The body has a groove on its outer surface, and an opening region is formed on a bottom wall of the groove.

In conclusion, it should be noted that the above embodiments are only used for describing, instead of limiting, the technical solutions of the present application; although the present application is described in detail with reference to the foregoing embodiments, those skilled in the art should understand that they may modify the technical solutions described in the foregoing embodiments, or replace some or all of the technical features therein; however, these modifications or replacements do not make the essence of the corresponding technical solutions deviate from the scope of the technical solutions of the embodiments of the present application, and should be all included in the scope of the claims and description of the present application. In particular, the technical features mentioned in the various embodiments can be combined in any manner provided that there is no structural conflict. The present application is not limited to the particular Examples disclosed herein, but rather includes all technical solutions falling within the scope of the claims.

## Claims

1. A battery cell, comprising:
a shell;
a first pressure relief component disposed on a first wall portion of the shell, the first pressure relief component being configured to be actuated when the temperature inside the battery cell or outside the battery cell reaches a first threshold value; and
a second pressure relief component disposed on a second wall portion of the shell, the second pressure relief component being configured to be actuated when the pressure inside the battery cell reaches a second threshold value.

2. The battery cell according to claim 1, wherein the pressure relief component is configured to melt when the temperature inside the battery cell or outside the battery cell reaches the first threshold value.

3. The battery cell according to claim 1 or 2, wherein the first wall portion has a first pressure relief hole, and the first pressure relief component seals the first pressure relief hole.

4. The battery cell according to claim 3, wherein a plurality of first pressure relief holes are provided, and the plurality of first pressure relief holes are arranged in an array.

5. The battery cell according to claim 3 or 4, wherein a plurality of first pressure relief holes and a plurality of first pressure relief components are provided, the plurality of first pressure relief holes are spaced apart, the plurality of first pressure relief components are disposed corresponding to the plurality of first pressure relief holes, and the first pressure relief components seal the first pressure relief holes corresponding thereto.

6. The battery cell according to any one of claims 3 to 5, wherein at least a part of the first pressure relief component is located within the first pressure relief hole.

7. The battery cell according to any one of claims 3 to 6, wherein the first pressure relief component is molded by injection within the first pressure relief hole.

8. The battery cell according to any one of claims 3 to 7, wherein the first pressure relief component comprises a main body, a first limiting portion and a second limiting portion, at least a part of the main body is located within the first pressure relief hole; and
the first limiting portion and the second limiting portion are respectively connected to two ends of the main body in a thickness direction of the first wall portion, both the first limiting portion and the second limiting portion protrude from an outer peripheral surface of the main body, and a part of the first wall portion is located between the first limiting portion and the second limiting portion.

9. The battery cell according to claim 8, wherein the first wall portion is provided with a first groove on its outer surface, the first wall portion is provided with a second groove on its inner surface, the first pressure relief hole extends through a bottom wall of the first groove and a bottom wall of the second groove, at least a part of the first limiting portion is located within the first groove, and at least a part of the second limiting portion is located within the second groove.

10. The battery cell according to claim 9, wherein the battery cell further comprises a first sealing member, and in the thickness direction of the first wall portion, the first sealing member is disposed between the first limiting portion and the bottom wall of the first groove, or the first sealing member is disposed between the second limiting portion and the bottom wall of the second groove.

11. The battery cell according to any one of claims 3 to 10, wherein in the thickness direction of the first wall portion, the first pressure relief component has a first surface facing the inside of the shell and a second surface facing away from the inside of the shell, the first pressure relief component is provided with a third groove, and the third groove is recessed from the first surface toward the second surface, or the third groove is recessed from the second surface toward the first surface.

12. The battery cell according to claim 3 or 4, wherein a plurality of first pressure relief holes are provided, the plurality of first pressure relief holes are spaced apart, and the first pressure relief component seals the plurality of first pressure relief holes.

13. The battery cell according to any one of claims 3 to 12, wherein the first wall portion has a fourth groove, the fourth groove is disposed on an outer surface or inner surface of the first wall portion, the first pressure relief hole is disposed on a bottom wall of the fourth groove, and at least a part of the first pressure relief component is accommodated within the fourth groove.

14. The battery cell according to claim 13, wherein the battery cell further comprises a first fixing member, the first fixing member is connected to the first wall portion, a part of the first pressure relief component is located between the first fixing member and the bottom wall of the fourth groove in the thickness direction of the first wall portion, and the first fixing member is configured to fix the first pressure relief component within the fourth groove.

15. The battery cell according to claim 14, wherein the first fixing member is annular.

16. The battery cell according to claim 14 or 15, wherein an outer peripheral surface of the first fixing member is connected to a side wall of the fourth groove.

17. The battery cell according to any one of claims 13 to 16, wherein the battery cell further comprises a second sealing member, the second sealing member is located between the first pressure relief component and the bottom wall of the fourth groove in the thickness direction of the first wall portion, and the second sealing member is disposed around the plurality of first pressure relief holes.

18. The battery cell according to any one of claims 3 to 17, wherein the first wall portion and the second wall portion are located on the same wall of the shell, the second wall portion is provided with a second pressure relief hole, the second pressure relief component is mounted in the second pressure relief hole, and the plurality of first pressure relief holes are arranged around the second pressure relief hole.

19. The battery cell according to any one of claims 12 to 17, wherein the first wall portion and the second wall portion are located on the same wall of the shell, the second wall portion is provided with a second pressure relief hole, the second pressure relief component is mounted in the second pressure relief hole, the plurality of first pressure relief holes are arranged around the second pressure relief hole, the first pressure relief component is provided with a first through hole, and a projection of the second pressure relief component at least partially overlaps with the first through hole in a thickness direction of the second wall portion.

20. The battery cell according to claim 19, wherein the second wall portion has a first boss, the first boss protrudes from an outer surface or inner surface of the second wall portion, the first boss is disposed around the second pressure relief hole, and the first pressure relief component sleeves an outer peripheral surface of the first boss via the first through hole.

21. The battery cell according to claim 20, wherein the battery cell further comprises a second fixing member, the second fixing member is connected to the outer peripheral surface of the first boss, a part of the first pressure relief component is located between the second fixing member and the second wall portion in the thickness direction of the second wall portion, and the second fixing member is configured to fix the first pressure relief component onto the second wall portion.

22. The battery cell according to claim 21, wherein the second fixing member is annular.

23. The battery cell according to claim 21 or 22, wherein an outer peripheral surface of the second fixing member is connected to the outer peripheral surface of the first boss.

24. The battery cell according to any one of claims 19 to 23, wherein the battery cell further comprises a third sealing member, the third sealing member is located between the first pressure relief component and the second wall portion in the thickness direction of the second wall portion, and the third sealing member is disposed around the first through hole.

25. The battery cell according to any one of claims 3 to 24, wherein the area of the first pressure relief hole is S₁, satisfying: 1 mm²≤S₁≤100 mm².

26. The battery cell according to claim 25, wherein 2 mm²≤S₁≤50 mm².

27. The battery cell according to any one of claims 1 to 26, wherein the second pressure relief component comprises a body and a filter element, the body has an opening region, the filter element is disposed on a side of the opening region facing the inside of the shell, and the filter element is configured to divide the opening region into multiple sub-regions.

28. The battery cell according to claim 27, wherein a fifth groove is disposed on the side of the second pressure relief component facing the inside of the shell, the opening region is formed on a bottom wall of the fifth groove, at least a part of the filter element is accommodated within the fifth groove, and the filter element is connected to a side wall of the fifth groove.

29. The battery cell according to claim 27 or 28, wherein the area of the sub-region is S₂, satisfying: 1 mm²≤S₂≤400 mm².

30. The battery cell according to claim 27, wherein 2 mm²≤S₂≤200 mm².

31. The battery cell according to any one of claims 1 to 30, wherein the first threshold value is T, satisfying: 95°C≤T≤300°C.

32. The battery cell according to any one of claims 1 to 31, wherein the second threshold value is P, satisfying 0.3 Mpa≤P≤2.3 Mpa.

33. The battery cell according to any one of claims 1 to 32, wherein the shell comprises a case and an end cover, the case comprises a bottom wall and a side wall surrounding the bottom wall, one end of the side wall is connected to the bottom wall, the other end of the side wall encloses to form an opening, and the end cover is configured to cover the opening;
wherein the end cover is provided with the first pressure relief component and the second pressure relief component.

34. The battery cell according to claim 33, wherein the bottom wall is provided with the first pressure relief component.

35. The battery cell according to any one of claims 1 to 32, wherein the shell comprises a case and an end cover, the case comprises a bottom wall and a side wall surrounding the bottom wall, one end of the side wall is connected to the bottom wall, the other end of the side wall encloses to form an opening, and the end cover is configured to cover the opening;
wherein the end cover is provided with the second pressure relief component, and the bottom wall is provided with the first pressure relief component.

36. The battery cell according to any one of claims 1 to 32, wherein
the shell comprises a case and an end cover, the case comprises a bottom wall and a side wall surrounding the bottom wall, one end of the side wall is connected to the bottom wall, the other end of the side wall encloses to form an opening, and the end cover is configured to cover the opening;
wherein the end cover is provided with the first pressure relief component, and the bottom wall is provided with the second pressure relief component.

37. The battery cell according to any one of claims 1 to 32, wherein
the shell comprises a case, a first end cover and a second end cover, the case comprises a third side wall and a fourth side wall disposed opposite each other in a third direction, as well as a first side wall and a second side wall disposed opposite each other in a second direction, the third side wall, the fourth side wall, the first side wall and the second side wall enclose to form an accommodating cavity having a first opening and a second opening, the first opening and the second opening are disposed opposite each other in a first direction, the first end cover is configured to cover the first opening, the second end cover is configured to cover the second opening, and the first direction, the second direction and the third direction are perpendicular to one another;
wherein the third side wall is provided with the second pressure relief component, and both the first end cover and the second end cover are provided with the first pressure relief component.

38. A battery, comprising the battery cell according to any one of claims 1 to 37.

39. An electrical device, comprising the battery cell according to any one of claims 1 to 37 or the battery according to claim 38, wherein the battery cell or the battery is configured to provide electric energy.
